# EUROPEAN PATENT SPECIFICATION

(11) **EP 2 252 621 B1**
(45) Date of publication and mention of the grant of the patent: **16.07.2014**
(21) Application number: 09722562.7
(22) Date of filing: 13.03.2009
(51) Int. Cl.: C07F 7/18

(54) **SILANES AND POLYSILOXANES**
Silane und Polysiloxane
SILANES ET POLYSILOXANES

(30) Priority: 20.03.2008 EP 08005246
(43) Date of publication of application: 24.11.2010
(73) Proprietor: Huntsman Textile Effects (Germany) GmbH, 86462 Langweid a. Lech (DE)
(72) Inventor: CHROBACZEK, Harald, 86153 Augsburg (DE); TSCHIDA, Günther, 86830 Schwabmünchen (DE); WECH, Sabrina, 86647 Lauterbach (DE); LINDMAIR, Gabriele, 86405 Meitingen (DE)
(86) International application number: PCT/EP2009/001819
(87) International publication number: WO 2009/115236

(56) References cited:
- WO-A-2004/046452
- US-A- 4 913 972
- US-A1- 2004 216 641
- US-A1- 2005 136 265

## Description

This invention concerns novel silanes. It further concerns novel polyorganosiloxanes and their use.

It is known to use polyorganosiloxanes for treating textile fabrics. Textiles can thereby be endowed with desired properties such as, for example, a soft hand and water-repellent properties.

It is further known to use monomeric silanes for preparing polyorganosiloxanes. Polysiloxanes containing acrylato groups are also known, for example from DE-A 102 19 734, EP-A 564 253, US-A 4 528 081 and EP-A 373 659 and US 6 211 322 B1. The references cited above also reveal that it is known to cure silicon compounds which contain acrylate units by free-radical polymerization. This free-radical polymerization may be effected by UV irradiation for example.

US 4 913 972 A discloses the reaction of an amino functional silane with a diacrylate. The reaction product is used as a carrier for pigment pastes, as well as for wood treatment agents. According to the prior art, polyorganosiloxanes having functional groups, for example acrylate groups, in side chains are obtainable by condensation or equilibration reactions. In these reactions, polyorganosiloxanes are reacted with monomeric silanes bearing reactive groups, the starting compounds used in the case of condensation reactions being polysiloxanes having terminal OH groups.

The silanes known from the prior art and the polyorganosiloxanes prepared from these prior art silanes have disadvantages, for example with regard to properties of the textiles finished therewith and the durability of these properties, as well as advantages. Furthermore, some known silanes and some known polysiloxanes are costly and inconvenient to prepare because of the choice of desired substituents.

It is an object of the present invention to provide silanes useful for incorporation into a given polyorganosiloxane chain and also polyorganosiloxanes useful in the treatment of textile fabrics composed of fiber materials in that they endow the fiber materials in the treatment with advantageous properties coupled with high durability to laundering operations.

We have found that this object is achieved for the first part by monomeric silanes of the general structural formula (XXXV) 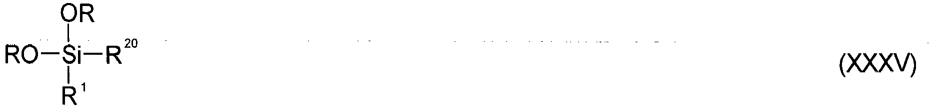 wherein all R radicals independently represent phenyl or a branched or unbranched alkyl radical of 1 to 18 carbon atoms, preferably represent -CH₃ or -CH₂-CH₃, wherein R¹ represents R or OR or 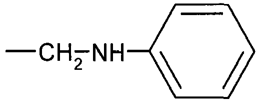 wherein R²⁰ represents a radical of one of the formulae (XXXVI) to (XLI) or one of the formulae (XLI a) to (XLI h) 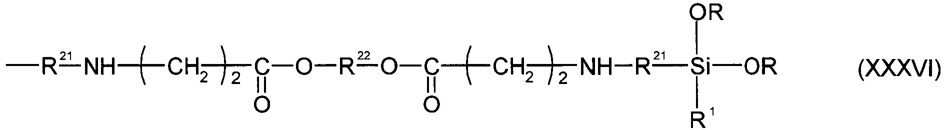 wherein R²¹ represents a linear or branched alkylene radical of 3 to 8 carbon atoms which may be interrupted by one or more -NH bridges and wherein R²² is a divalent radical of the formula 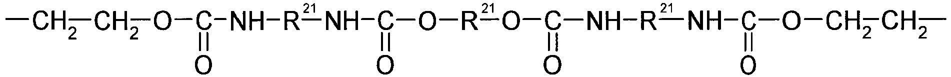 wherein each of the R²¹ radicals either has the abovementioned meaning or represents a radical of the formula 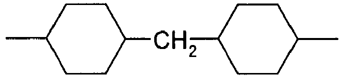 or wherein R²² represents a radical of formula 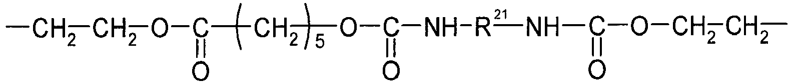 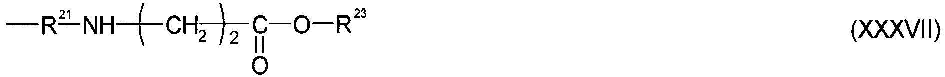 wherein R²³ represents a linear or branched alkyl radical of 8 to 18 carbon atoms, 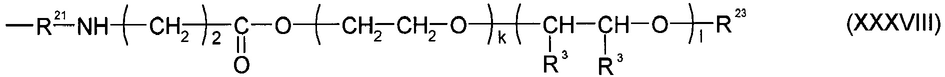 where, in the formula (XXXVIII), R²³ either has the abovementioned meaning or represents H or -CH₃,
wherein one of the R³ radicals represents H and the other represents CH₃, k and l are each from 1 to 31, preferably from 1 to 22, and the sum total of k + l is in the range from 3 to 45, preferably from 3 to 25, and where the individual units 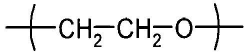 and 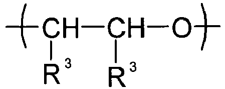 may be distributed across the chain in any desired manner, 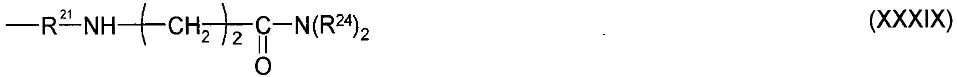 wherein each of the two R²⁴ radicals independently represents a linear or branched alkyl radical of 1 to 6 carbon atoms, 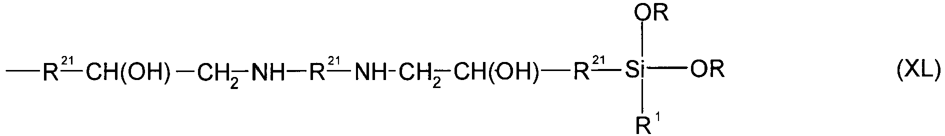 where, in the formula (XL), R²¹ either has the abovementioned meaning or represents a divalent radical of the formula 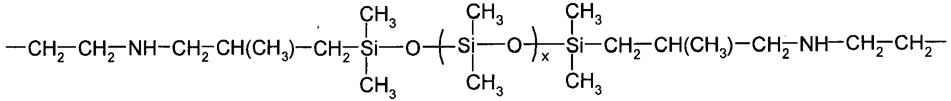 wherein x is from 0 to 1500, 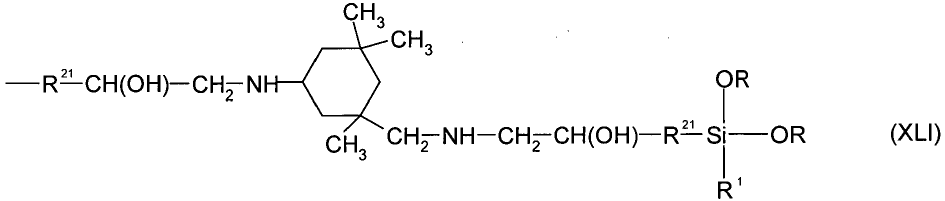 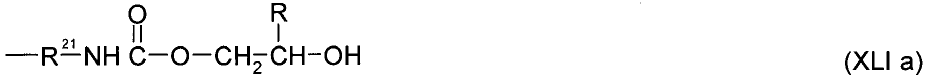 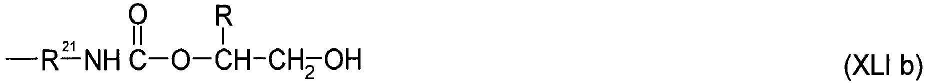 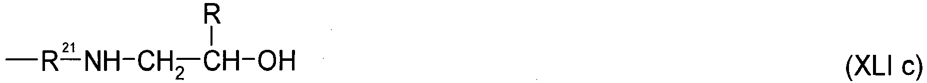 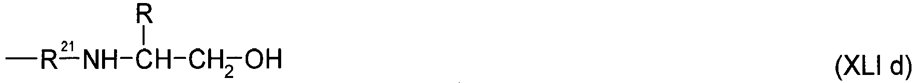 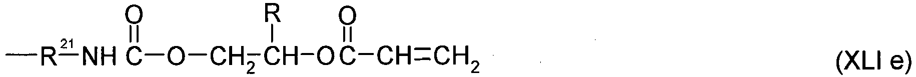 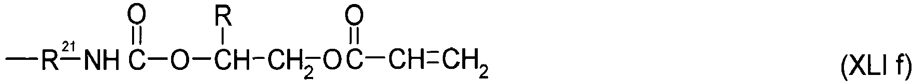 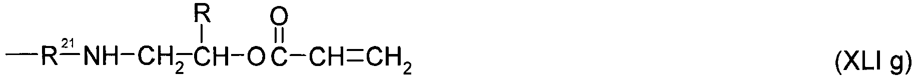 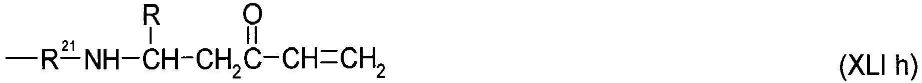 where the silane of the formula (XXXV) may also be a product formed by reaction of a silane of the formula 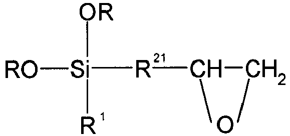 with a polyether amine or a product T, in which case the polyether amine is preferably a product of the formula 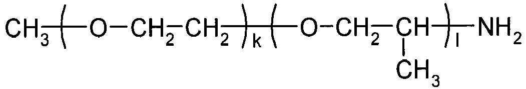 or of the formula 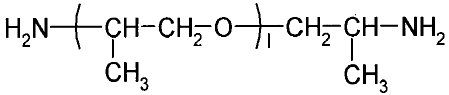 or of the formula 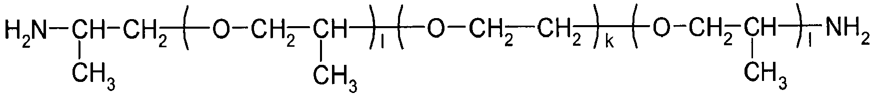 or of the formula 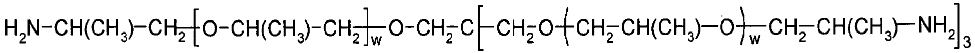 where w is from 2 to 8,
where k and l are each from 1 to 31, preferably from 1 to 22,
and the product T is a product of one of the formulae F₁ to F₃ 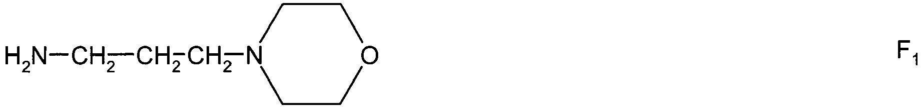 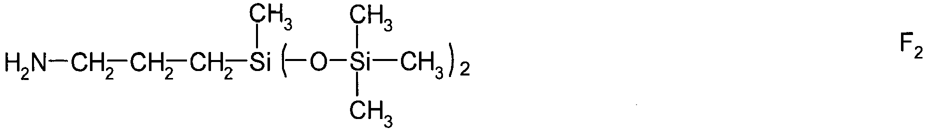 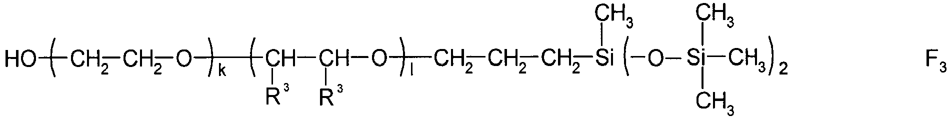 or where the product T is a 3-(2-aminoethyl)aminopropylmethylsilsesquioxane with terminal -OCH₃ group.

The stated object is further achieved by providing polyorganosiloxanes obtainable by reaction of a polyorganosiloxane of the formula (VIII) or of a mixture of polyorganosiloxanes of the formula (VIII) 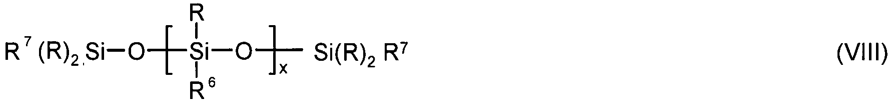 where R⁶ represents R or a radical of the formula (IX) 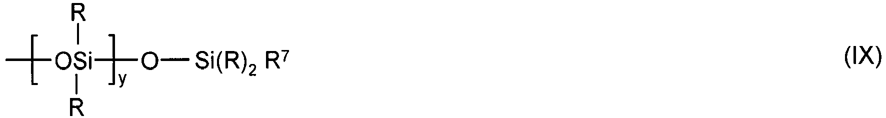 where x is from 0 to 1500, preferably from 10 to 1500,
y is from 0 to 500,
wherein all the R⁷ radicals present represent R or OH or OR and all R radicals have the meaning mentioned in claim 1,
with a silane of the formula (XXXV) or with a mixture of a silane of the formula (XXXV) and a silane of the formula (I) 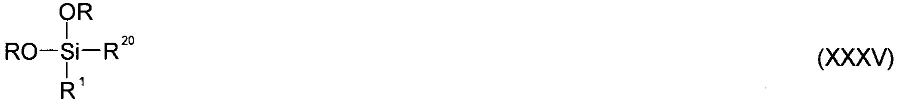 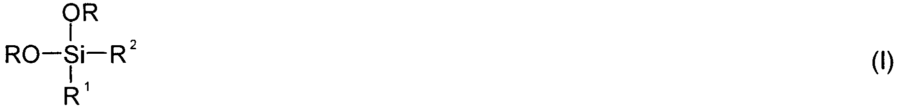 wherein R, R²⁰ and R¹ have the meanings mentioned in claim 1 and where R² represents vinyl or a linear or branched alkyl radical of 1 to 18 carbon atoms which may be substituted by one or more, optionally quaternized, amino groups, amido groups, mercapto groups, epoxy groups, phosphono groups, hydroxyl groups or fluorine atoms,
or where
R² represents a radical of the formula (II), of the formula (III) or of the formula (IV), 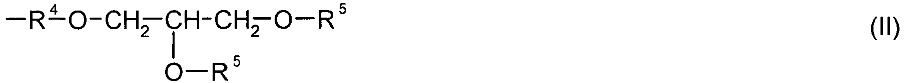 wherein both the R⁵ radicals represent 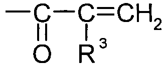 or one of the R⁵ radicals represents H and the other represents 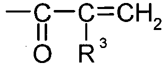 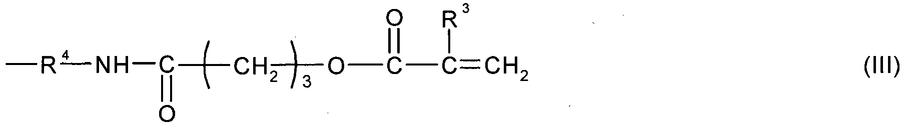 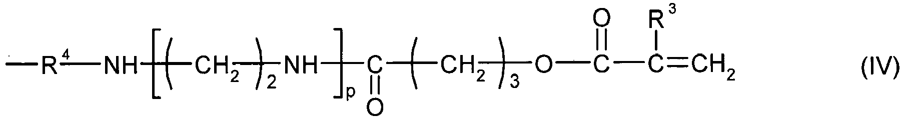 where p is 0, 1 or 2,
where R³ in each occurrence represents H or CH₃, or where R² represents a radical of the formula (V) 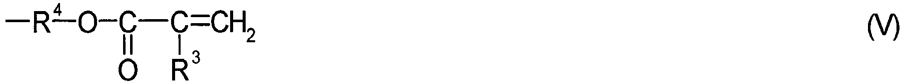 where, in the formulae (III), (IV) and (V), R⁴ in each occurrence represents a divalent linear or branched hydrocarbyl radical of 1 to 4 carbon atoms,
or where R² represents a radical of the formula (VI) or of the formula (VII) or of the formula (X) 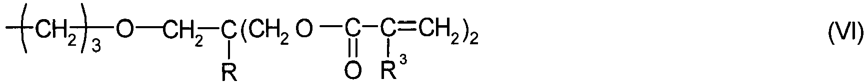 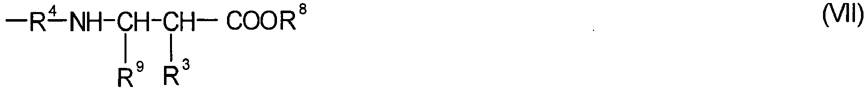 wherein R⁸ represents H or CH₃ or C₂H₅ or -CH₂CH₂-OH and R⁹ represents H or -COOR⁸ 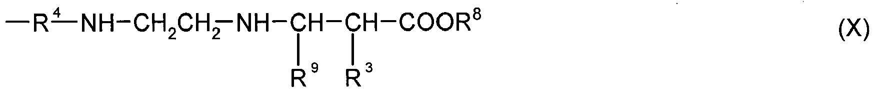 or wherein R² represents a radical of one of the formulae (XI), (XIa) or (XII) to (XX) or of the formula (XVIIIa) or of the formula (XXa) or of the formula (XXb) or of the formula (XXc), 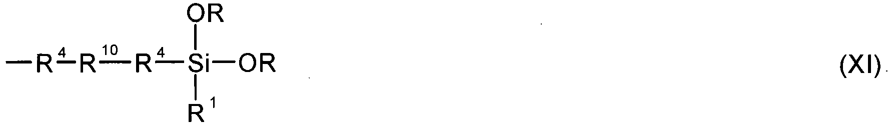 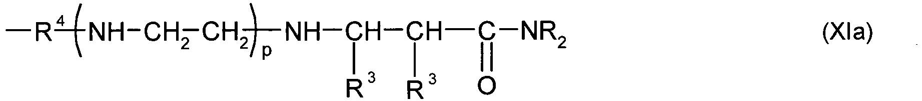 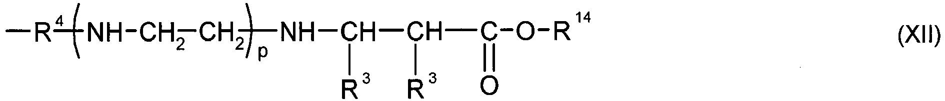 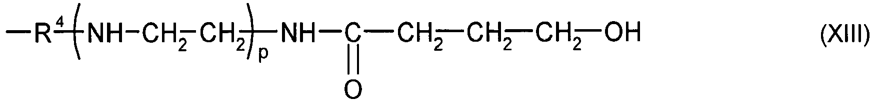 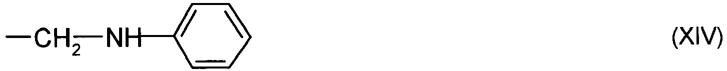 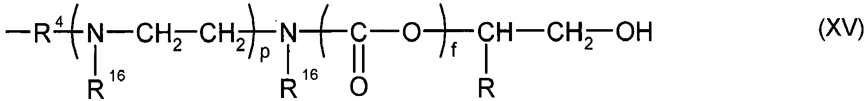 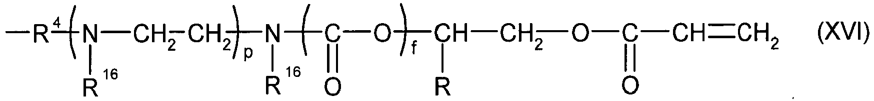 where p represents 0, 1 or 2,
in all the formulae R⁴ represents a divalent linear or branched hydrocarbyl radical of 1 to 4 carbon atoms,
R³ in each occurrence represents H or CH₃,
R¹⁴ represents H or a linear or branched alkyl radical of 1 to 18 carbon atoms or represents a radical of the formula (XIX),
wherein the individual units -(CH₂-CH₂-O)- and -(CHR³-CHR³-O)- can be distributed across the chain in any desired manner, wherein k and l are each from 1 to 31, preferably from 1 to 22, and the sum total of k+l is from 3 to 45, preferably from 3 to 25,
wherein f represents 0 or 1,
all the R¹⁶ radicals independently represent H or 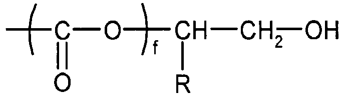 or 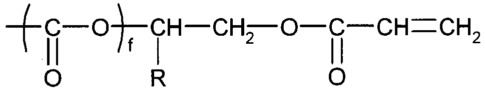 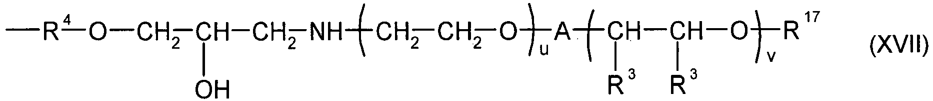 wherein A represents a direct bond or a divalent radical of the formula 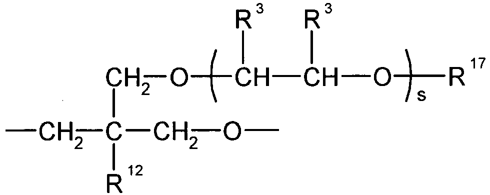 where, in the case of the formula (XVII), the values of u, v and s are so chosen that the equivalent weight of this R² radical is in the range from 100 to 5000, where one or two of u, v and s may also assume the value of 0 and where the individual units -CH₂-CH₂-O- and 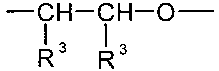 can be distributed across the chain in any desired manner,
where R¹² represents H or C₂H₅ and
where R¹⁷ represents R or -R⁴-NH₂ or 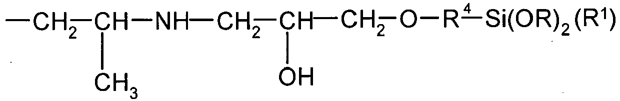 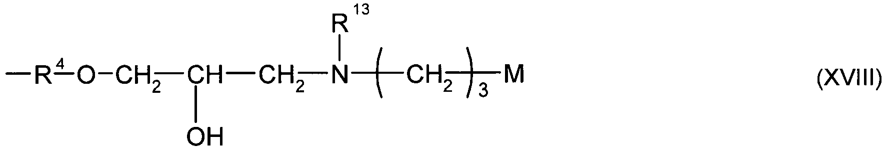 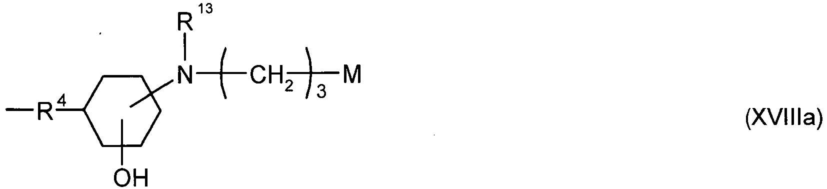 where M is selected from 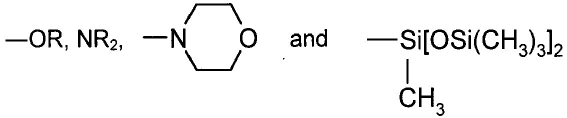 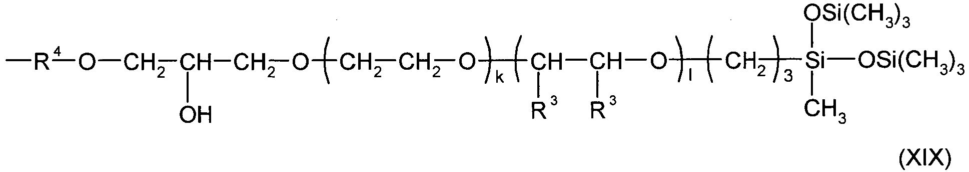 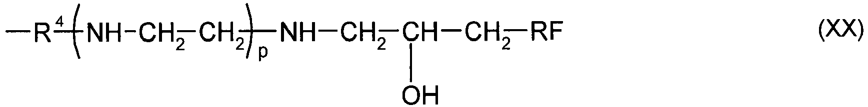 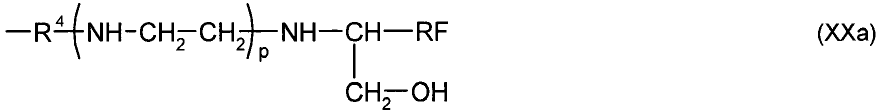 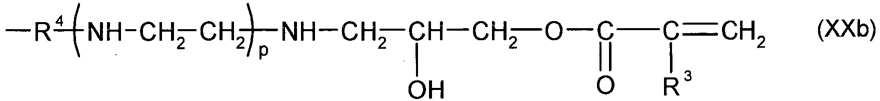 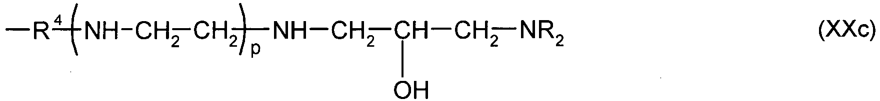 wherein RF represents a perfluoroalkyl radical of 5 to 23 carbon atoms,
wherein R¹⁰ represents a divalent radical of one of the formulae (XXI) to (XXIVa), 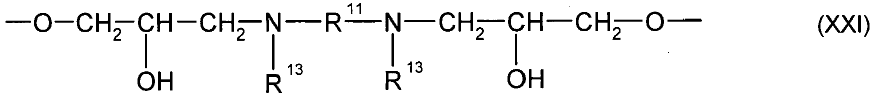 wherein R¹³ represents H or -CH(CH₃)₂ or -CH₂-CH(CH₃)₂, 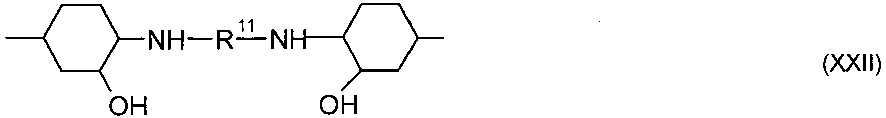 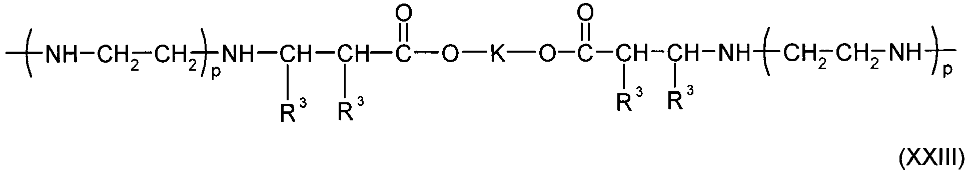 wherein K represents a linear or branched alkylene radical of 2 to 18 carbon atoms, 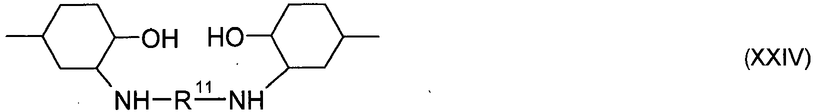 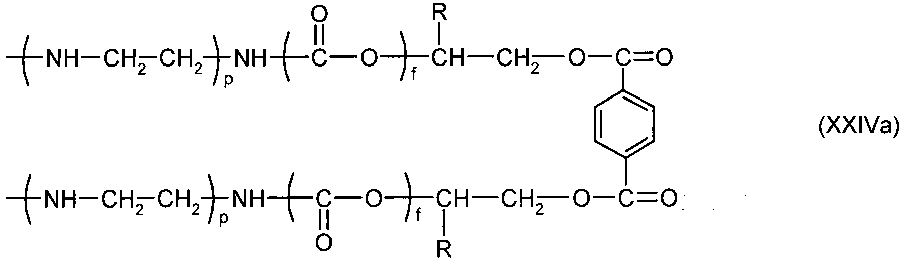 wherein f represents 0 or 1,
where each of the R¹¹ radicals represents 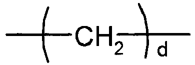 wherein d is from 1 to 6,
or represents a radical of one of the formulae (XXV) to (XXXI) 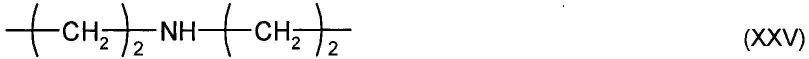 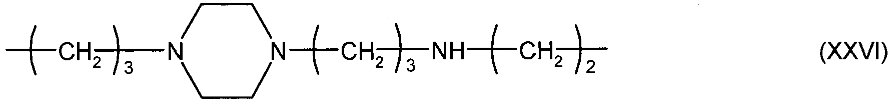 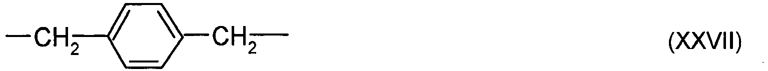 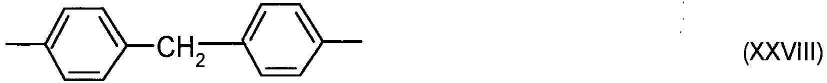 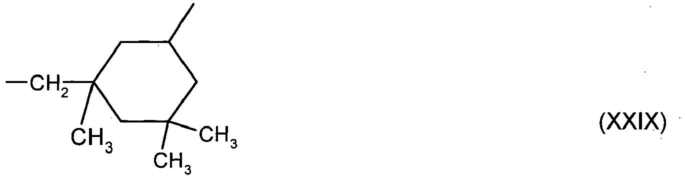 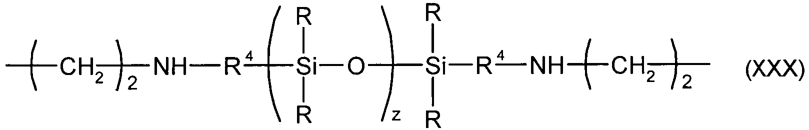 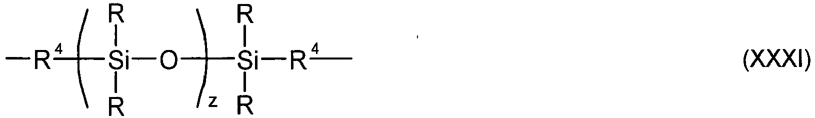 wherein z is from 8 to 500, preferably from 8 to 20,
where all or some of the nitrogen atoms which are present in the abovementioned formulae and which are not part of an amide group may be present in quaternized form.

The silanes of the formula (XXXV) according to the present invention make it possible to prepare novel polyorganosiloxanes which have specific, hitherto unknown structures. By selecting the silanes in an appropriate manner it is thereby possible to obtain polyorganosiloxanes having specific structural units, including polyorganosiloxanes in which polymer units are bonded together intramolecularly that would not be miscible with each other as intermolecular polymers. On the other hand, the polyorganosiloxanes obtainable by reaction of polyorganosiloxanes of the formula (VIII) with a mixture of silanes of the formula (I) and silanes of the formula (XXXV) also have advantageous properties when used in the treatment of textile fabrics composed of fiber materials.

The polyorganosiloxanes according to the present invention are very useful in the treatment of fiber materials irrespectively of whether they were prepared using silanes of the formula (XXXV) or a mixture of silanes of the formula (I) and silanes of the formula (XXXV). They are also useful for coating operations, for example coating of textile fabrics. Similarly, glass fiber fabrics can be treated with these novel polysiloxanes. The dimeric/oligomeric silanes according to the present invention or the novel polysiloxanes according to the present invention can be applied to the textile fabrics or to the glass fiber fabrics by following known methods, for example by coating or padding (bath impregnation).

The novel polyorganosiloxanes according to the present invention which are obtainable by reacting the silanes of the formula (XXXV) according to the present invention or a mixture of the silanes of the formula (I) and the silanes of formula (XXXV) with polyorganosiloxanes of the formula (VIII) are useful, inter alia, in the treatment of textile fabrics composed of fiber materials. Useful fiber materials include wovens, knits or nonwovens composed of natural or synthetic fibers, as for example of cotton, polyester, polypropylene or polyamide or mixtures thereof. In the case of polypropylene a plasma pretreatment can be carried out first. Application can be for example by means of padder processes or spraying. Application takes the form of a coating, if appropriate. The novel polyorganosiloxanes according to the present invention are also useful for the curtain-coating methods known to a person skilled in the art. When the R² radical in the silane of the formula (I) or the R²⁰ radical in the silane of the formula (XXXV) includes (meth)acrylate units, the curtain-coating operation may be followed by a curing operation in which the acrylate units are polymerized. This can be effected in a known manner by means of electron beams or UV radiation. Known photoinitiators such as products of the IRGACURE^{®} range (Ciba Spezialitätenchemie, Basel, Switzerland) can be used for this, or products as mentioned in US-B1 6 211 308 (column 10).

The novel polysiloxanes according to the present invention are also useful for finishing precursor fibers, for example acrylic fibers, in the manufacture of carbon fibers. They can further be used for modifying epoxy resins for a variety of applications.

The reaction of the silanes of the formula (XXXV) or of mixtures of silanes of the formula (XXXV) and silanes of the formula (I) with organosiloxanes of the formula (VIII) leads to novel polyorganosiloxanes. It was found that, surprisingly, these novel polyorganosiloxanes can have excellent reactivity, particularly in curing operations, and also can bring about improved effects on the part of fiber materials treated therewith, for example an enhanced oil-repellent effect. Advantages also result particularly when the functional groups present in the silanes (R² and R²⁰ respectively) contain acrylate radicals, see for example the formulae (III), (IV), (V) and (XVI). These acrylate radicals are then also present in the products obtained after reaction with organosiloxanes, and can be cured/polymerized, by UV radiation for example. This renders these novel polysiloxanes useful for the coating of textiles.

To prepare the polyorganosiloxanes according to the present invention, a silane of the formula (XXXV) or a mixture of a silane of the formula (XXXV) and a silane of the formula (I) is reacted with a polyorganosiloxane of the formula (VIII) or a mixture of such polyorganosiloxanes.

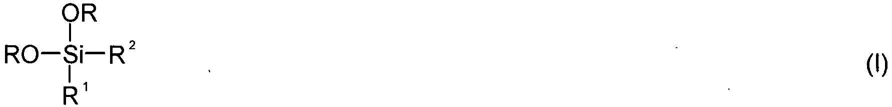

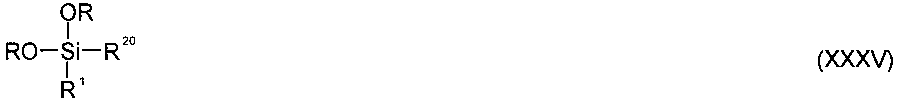

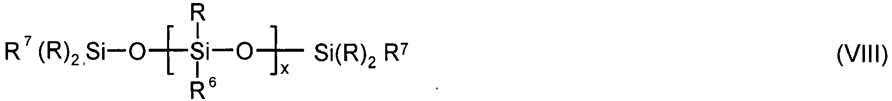

The polyorganosiloxane of the formula (VIII) may contain substituents in that, for example, R⁷ may represent R or OH or OR, in which case R has the meaning mentioned above and in claim 1, and R⁶ may represent R or a radical of the formula (IX).

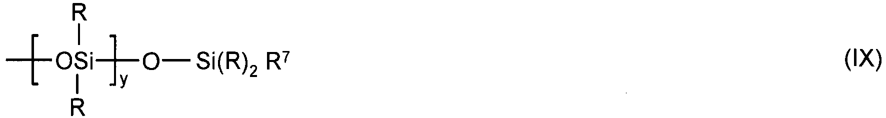

Preferably, however, an unsubstituted polydialkylsiloxane, in particular a polydimethylsiloxane, is used for the reaction with silane (mixture).

The compounds of the formula (VIII) are hereinafter referred to as "polyorganosiloxanes" for simplicity, even though they are oligoorganosiloxanes when x has low values.
In formula (VIII)
x is from 0 to 1500, preferably 10 to 1500, and
y is from 0 to 500,
and all R⁷ radicals present in the formulae (VIII) and (IX) represent R or OH or an OR group, where R has the abovementioned meaning. The reaction of the silanes or of mixtures of these silanes with polyorganosiloxanes of the formula (VIII) preferably utilizes the polyorganosiloxane and the silane in such proportions that from 1 to 10000 mol of polyorganosiloxane are used per mole of silane in the reaction, preferably from 5 to 1000 mol.

The polyorganosiloxanes of the formula (VIII) which are used for this reaction contain at least two R⁷ radicals at the ends of the polysiloxane chain. Each R⁷ radical represents an R radical of the abovementioned meaning or represents a hydroxyl group or an -OR group, where R has the abovementioned meaning.
The polyorganosiloxanes used for this reaction may contain further functional groups in side chains, for example amino groups, even though this possibility is not reflected in the formula (VIII). In the event of such a possibility, one or more of the R⁶ radicals present represent(s) a radical comprising such a functional group.
Furthermore, low molecular weight oligodialkylsiloxanes, for example, can be used as further organosiloxanes in addition to polyorganosiloxanes of the formula (VIII).

When the silanes are reacted with polyorganosiloxanes of the formula (VIII) in which none of the R⁷ radicals represents OH, the reaction is carried out under the conditions of equilibration which are known from silicone chemistry and the silane structure becomes incorporated into the polysiloxane chain.
When, however, one or more of the R⁷ radicals present is an OH group, condensation reactions can take place between these OH groups and OR groups of the silane to eliminate alcohol ROH.

The conditions required for the equilibration and condensation reactions are known from the silicone literature. The reactions leading to the novel polyorganosiloxanes are preferably carried out in the presence of a catalyst or catalyst mixture and at a temperature in the range from 80 to 130°C. Lewis acids or dilute mineral acids may make suitable catalysts, where appropriate. However, preference is given to basic catalysts such as alkali metal hydroxides or alkoxides, or to the catalysts mentioned hereinbelow.

As already mentioned, polyorganosiloxanes of the formula (VIII) can be used in which two of the R⁷ radicals present each represent an OH group.

The hydroxyl-containing polyorganosiloxanes mentioned, hereinafter referred to as "α,ω-dihydroxypolyorganosiloxanes" can thus be reacted with silanes of the formula (XXXV) according to the present invention or with a mixture of silanes of the formula (XXXV) and silanes of the formula (I). This reaction, as will be more particularly described hereinbelow, can be carried out such that either an equilibration takes place, in which case structural units of the silanes are incorporated into the chain of the α,ω-dihydroxypolyorganosiloxane, or that condensation reactions take place between terminal OH groups on the polysiloxane and the silanes. The second version, i.e., condensation, is preferable in this case if only because it can be carried out under more gentle conditions, i.e., at lower temperature, than the equilibration reaction. The reactions mentioned give rise to polyorganosiloxanes which contain the R² or R²⁰ units from the silanes.
Preferably, however, unsubstituted polydimethylsiloxanes are used and not OH-containing polysiloxanes of the formula (VIII).

There are in principle 2 conceivable forms of reaction mechanisms, namely one which leads to equilibration reactions and one which leads to condensation reactions. The condensation reaction takes place at lower tempertures. In the condensation reaction, OR groups on the silanes react with terminal OH groups on the α,ω-dihydroxypolysiloxane via elimination of alcohol ROH and chain extension.
The reaction can be carried out as condensation at a temperature in the range from 80 to 105°C during 3 to 4 hours, preferably under reduced pressure, for example at a pressure in the region of 100 mbar. Details of condensation reactions are known from silicone chemistry. The polysiloxane used has to have hydroxyl groups at two or more chain ends for a condensation reaction to be able to take place at all.

Equilibration reactions are likewise well known from the literature of silicone chemistry. An equilibration reaction involves the insertion of silane units into the polysiloxane chain. Equilibration thus requires that Si-O-Si bonds in the chain be scissioned. This explains why higher temperatures are needed for equilibration than for condensation. The reaction to form polysiloxanes according to the present invention is carried out at a temperature in the range from 110 to 135°C during a time of 3 to 4 hours when equilibration is desired. When the polyorganosiloxane of the formula (VIII) does not contain any OH groups, the equilibration reaction is preferably carried out in the presence of water in order that OR groups may be hydrolyzed to OH groups.

The reaction which leads to novel polyorganosiloxanes according to the present invention is preferably carried out in the presence of a catalyst or a mixture of catalysts, both when the reaction takes the form of a condensation and when the reaction takes the form of an equilibration.
Suitable catalysts are known from the literature of the silicone field. Acidic catalysts can be used in some cases, examples being Lewis acids or dilute mineral acids; normally, however, basic catalysts are more suitable and therefore preferable. Alkali metal hydroxides such as NaOH, KOH or LiOH and particularly metal alkoxides are particularly suitable basic catalysts. Alkali metal alkoxides of the formula M(OR) are particularly highly suitable. These metal alkoxides can be used for example as a 20% to 30% solution in the underlying alcohol. In the formula, M represents Na or K and R represents alkyl of 1 to 4 carbon atoms.
Useful catalysts further include 4-dimethylaminopyridine and bicyclic compounds which contain one or more nitrogen atoms as ring members. Examples are 1,5-diazabicyclo[2.2.2]octane, 1,5-diazabicyclo[4.3.0]non-5-ene and 1,8-diazabicyclo[5.4.0]undec-7-ene.

The silanes of the formula (XXXV) according to the present invention contain two or three -OR groups.

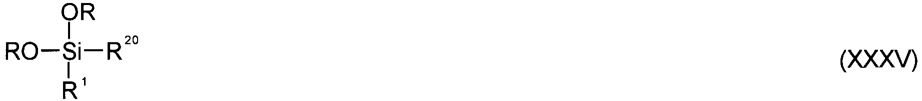

Here, all R radicals independently represent phenyl or a branched or unbranched alkyl radical of 1 to 18 carbon atoms. Preferably, all R radicals represent methyl or ethyl.
The R¹ radical in the formula (XXXV) represents R or -OR or

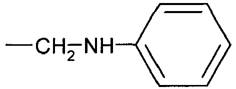

The R²⁰ radical in the silanes of the formula (XXXV) does not react with the polyorganosiloxane and reappears intact in the resulting new polyorganosiloxane, while the -OR radicals do react with the polyorganosiloxane, either by condensation or by equilibration.
The R²⁰ radical represents a radical of one of the formulae (XXXVI) to (XLI) or of one of the formulae (XLI a) to (XLI h)

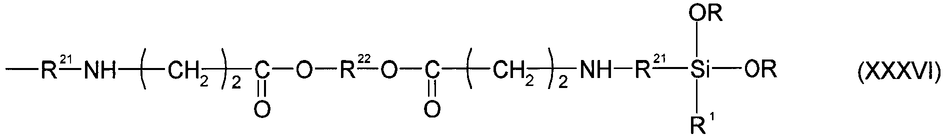

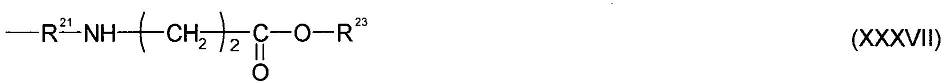

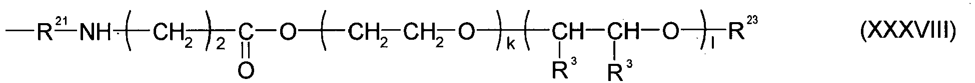

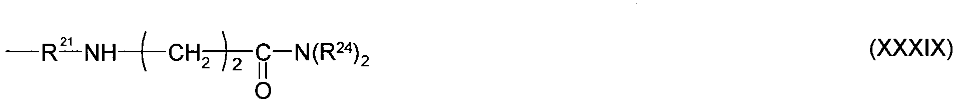

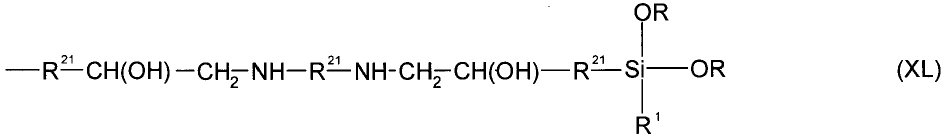

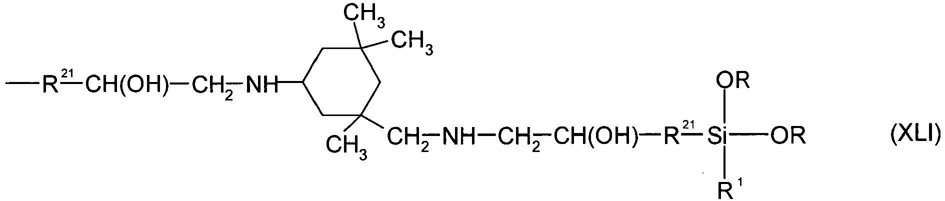

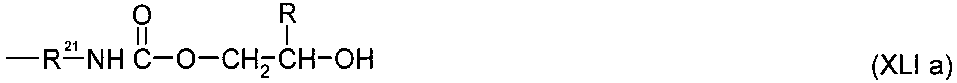

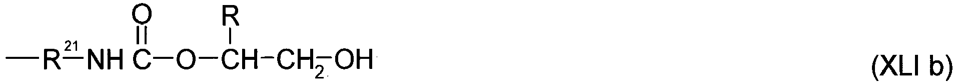

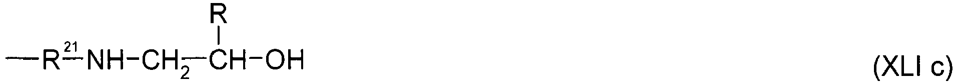

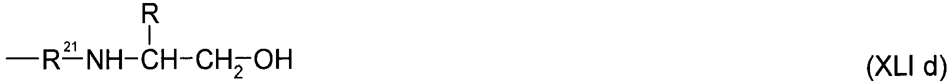

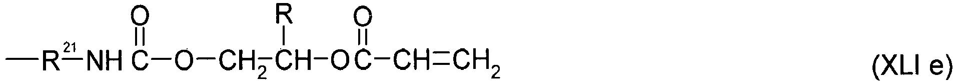

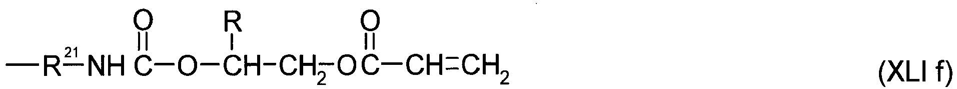

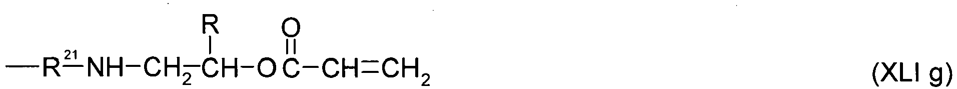

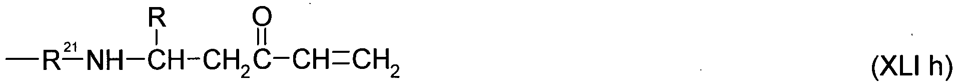

In these formulae:
- R²¹ represents a linear or branched alkylene radical of 3 to 8 carbon atoms, which may be interrupted by one or more NH bridges,
- R²² represents a divalent radical of the formula 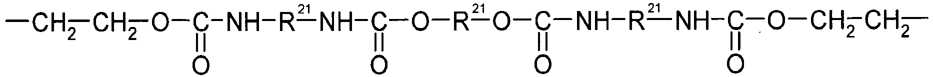 In this formula, each of the R²¹ radicals has the abovementioned meaning or represents 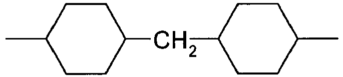 or 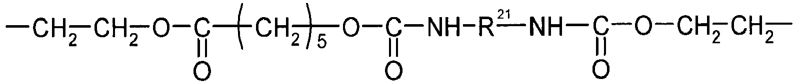
- R²³ represents a linear or branched alkyl radical of 8 to 18 carbon atoms.

In the formula (XXXVIII), the R²³ radical either has the abovementioned meaning or represents H or -CH₃.
In the formula (XXXVIII), each 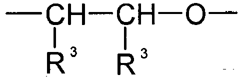 unit has one of the R³ radicals representing H and the other representing CH₃. k and l are each from 1 to 31, preferably from 1 to 22, and the sum total of k + l is from 3 to 45, preferably from 3 to 25. Furthermore, the individual units 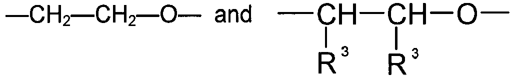 can be distributed across the chain in any desired manner.
In the formula (XXXIX), each of the two R²⁴ radicals independently represents a linear or branched alkyl radical of 1 to 6 carbon atoms.
In the formula (XL), each R²¹ radical either has the abovementioned meaning or represents a radical of the formula 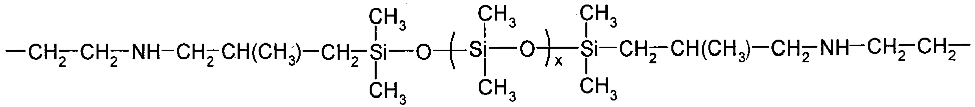 where x is from 0 to 1500. The silane of the formula (XXXV) can also be a product formed by reaction of a silane of the formula 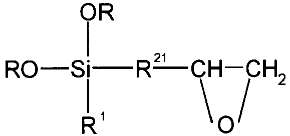 with a polyether amine or a product T, in which case the polyether amine is preferably a product of the formula 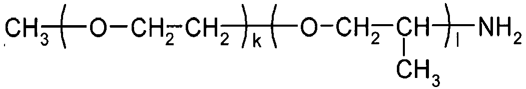 or of the formula 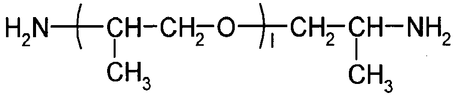 or of the formula 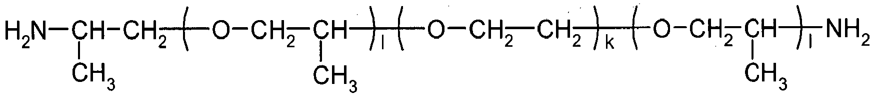 or of the formula 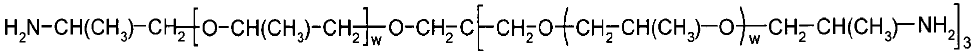 where w is from 2 to 8,
where k and l are each from 1 to 31, preferably from 1 to 22,
and the product T is a product of one of the formulae F₁ to F₃ 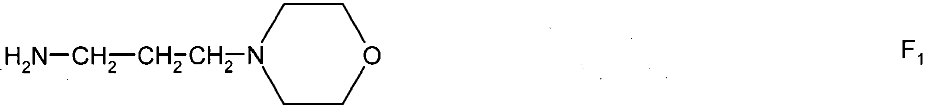 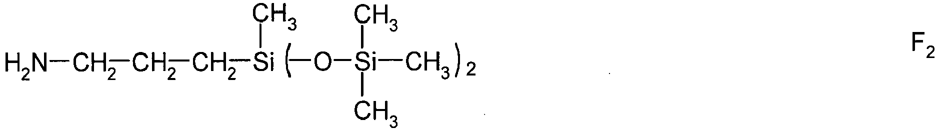 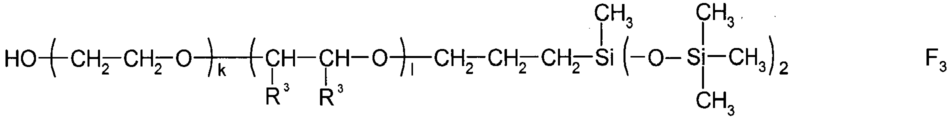 or where the product T is a 3-(2-aminoethyl)aminopropylmethylsilsesquioxane with terminal -OCH₃.

The novel polyorganosiloxanes according to the present invention are obtainable by reacting a polyorganosiloxane of the formula (VIII) 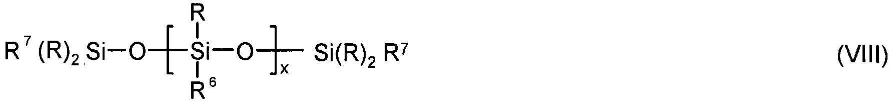 with either an above-described silane of the formula (XXXV) according to the present invention or with a mixture of a silane of the formula (XXXV) and a silane of the formula (I)

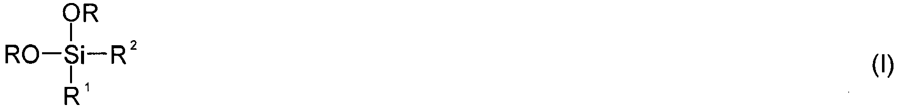

The silanes of the formula (I) were described above in connection with the statements about the achievement of the object.
It is also possible to use two or more silanes of the formula (I) or two or more silanes of the formula (XXXV) for the reaction with polyorganosiloxane, or else mixtures containing both one or more silanes of the formula (I) and one or more silanes of the formula (XXXV).

When silanes of the formula (I) are used, it is particularly preferable to use silanes or silane mixtures of the formula (I) which contain at least one silane of the formula (I) wherein R² is a radical of the formula (V)

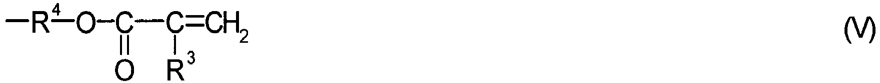

It was also found that it is often advantageous when silanes with acrylate radicals are used wherein the R³ radical is a methyl group, i.e., methacryloyl compounds.
The silanes of the formula (I) and of the formula (XXXV) are commercially available or they are obtainable by following methods which are known to a chemist. Possible syntheses are the reaction of a silane which contains an Si-H bond and 2 or 3 Si-attached chlorine atoms with allyl compounds, for example with allyl chloride, and subsequent further reaction with ammonia or an amine (in which case the terminal chlorine atom of the original allyl group is replaced by the corresponding nitrogenous radical) and also subsequent replacement of the Si-attached chlorine atoms by OR through reaction with alcohol. Furthermore, phosphorus-containing silanes of the formula (I) are obtainable by addition of (CH₃O)₂P(O)-H onto bisalkoxy- or trisalkoxysilanes which contain substituents having C=C double bonds, for example onto

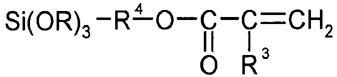

The preparation of certain fluorine-containing silanes of the formula (I) can be effected by reacting 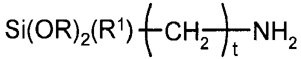 with fluoroalkyl-containing epoxides (see JP-2000-53950 A2 and JP-2000-53686 A2).

Silanes of the formula (I) in which the R² radical is a radical of the formula (V) are obtainable by reacting (RO)₂Si(R¹)-R⁴-Cl with CH₂=C(R³) -COOH.
Such silanes are also obtainable from ABCR in Germany.
Silanes of the formula (I) in which the R² radical is a radical of the formula (VI) are obtainable by reacting (Cl)₂Si(R)-H with 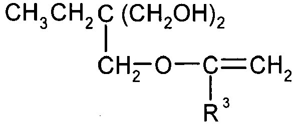 (the last-mentioned compound is obtainable by reacting one of the 3 OH groups of 1,1,1-trismethylolpropane with (meth)allyl chloride),
the Si-H bond adding onto the C=C double bond, subsequent esterification of the two remaining CH₂OH groups with (meth)acrylic acid and replacement of the chlorine atoms by OR groups through reaction with alcohol ROH.
Silanes of the formula (I) in which the R² radical is a radical of the formula (III) or of the formula (IV) are obtainable by addition of a lactone, for example γ-butyrolactone, onto an aminoalkyldialkoxysilane and subsequent reaction with (meth)acrylic acid or derivatives thereof.
Silane of the formula (I) in which the R² radical is a radical of the formula (VII) are obtainable by addition of (meth)acrylic esters onto aminoalkyldialkoxysilane.

In preferred silanes of the formula (I), the R² radical contains acrylate units or methacrylate units. Such silanes are commercially available, for example from ABCR GmbH & Co., Karlsruhe, Germany. Furthermore, such silanes are obtainable by following the teaching of DE-A 102 19 734.

Silanes of the formula (I) in which the R² radical is a radical of the formula (XI) and R¹⁰ is a radical of the formula (XXIII) are obtainable by reacting an amino-functional silane (formula (I) where R¹ = R and R² = -R⁴-NH₂) with an alkylene diacrylate.

Silanes in which the R¹⁰ radical is a radical of one of the formulae (XVII), (XVIII) or (XX) are obtainable by reacting appropriate epoxides with appropriate amines.

Silanes of the formula (XII) where R¹⁴ = alkyl are obtainable by reacting 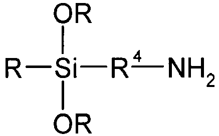 with an acrylic ester.

Silanes of the formula (I) in which the R² radical contains acrylate units or methacrylate units are commercially available, for example from ABCR GmbH & Co., Karlsruhe, Germany. Such silanes, for example of the formula (XVI), are also obtainable by reacting 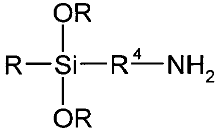 with an alkylene carbonate and then with acrylic acid (ester).
The silanes of the formula (XXXV) according to the present invention are likewise obtainable by following conventional methods, for example by reacting a commercially available silane of the formula 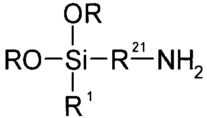 or of the formula 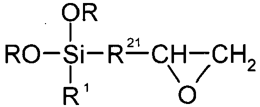 with acrylates (in the form of a Michael addition) or with cyclic carbonates such as ethylene carbonate or with mono- or polyamines (in which case the epoxy group of the silane reacts with an amino group by ring opening). Silanes of the formula (XXXV) are also obtainable by reacting the amino- or epoxysilanes mentioned with acrylates or with diacrylates, in which case the acrylates were formed by reacting 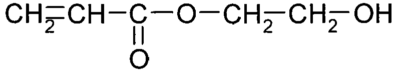 with diisocyanates and diols. The products are acrylates which contain urethane units.

The examples which follow illustrate the invention.

### Example 2 a, Preparation of silane of formula (XXXV) by reaction of an aminosilane with alkylene diacrylate

37.16 g of CH₂CH(CO)O(CH₂CH₂CH₂CH₂CH₂CH₂)O(CO)CHCH₂
   and
62.84 g of Si(OCH₂CH₃)₂(CH₃)(CH₂CH₂CH₂NH₂)
were placed together in the initial charge and heated without solvent to 60°C with stirring. The mixture was maintained at 60°C for 5 hours.
A slightly brownish cloudy liquid was obtained.

### Example 2 b, Reaction of silane of Example 2a with mixture of polysiloxanes

41.7 g of α,ω-dihydroxypolydimethylsiloxane (about 100 mPa.s)
99.3 g of α,ω-dihydroxypolydimethylsiloxane (about 600 mPa.s)
   and
8.7 g of the abovementioned silane
were placed together in the initial charge and heated to 90°C with stirring. On attainment of the temperature the catalyst (0.3 g of sodium methoxide, 6% in methanol) was added, stirring was continued at the stated temperature for 15 minutes and subsequently a vacuum of 200 mbar was applied. After 7 hours, the vacuum was relieved and the oil cooled down.
A thin cloudy oil was obtained.

### Example 2 c, Preparation of silane of formula (XXXV) and its reaction with mixture of two polysiloxanes

36.73 g of 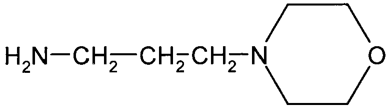 and
63.27 g of 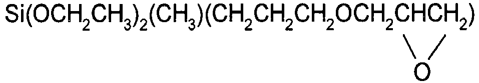
were placed in the initial charge together with 11.42 g of a catalyst mixture based on triethanolamine and heated to 70°C with stirring. This temperature was maintained for 6 hours. A slightly yellowish liquid was obtained.
43.3 g of α,ω-dihydroxypolydimethylsiloxane (about 100 mPa.s)
100.5 g of α,ω-dihydroxypolydimethylsiloxane (about 600 mPa.s)
   and
6.5 g of the abovementioned silane
were jointly placed in the initial charge and heated to 90°C with stirring. On attainment of the temperature mentioned a vacuum of 200 mbar was applied for 1 hour. Subsequently, the catalyst (0.1 g of sodium methoxide, 6% in methanol) was added at atmospheric pressure, stirring was continued at 90°C for 15 minutes and subsequently a vacuum of 200 mbar was applied once more. After 1 ½ hours, the vacuum was relieved again and the oil cooled down. A thick cloudy oil was obtained.

## Claims

1. A monomeric silane of the general structural formula (XXXV) 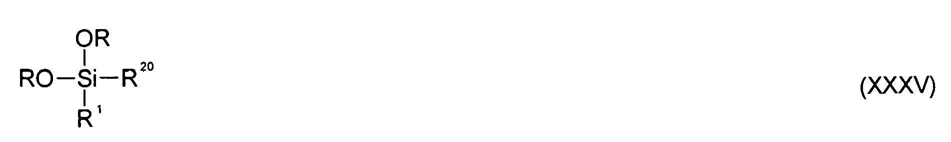 wherein all R radicals independently represent phenyl or a branched or unbranched alkyl radical of 1 to 18 carbon atoms, preferably represent -CH₃ or -CH₂-CH₃, wherein R¹ represents R or OR or 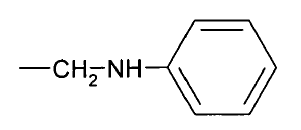 wherein R²⁰ represents a radical of one of the formulae (XXXVI) to (XLI) or one of the formulae (XLI a) to (XLI h) 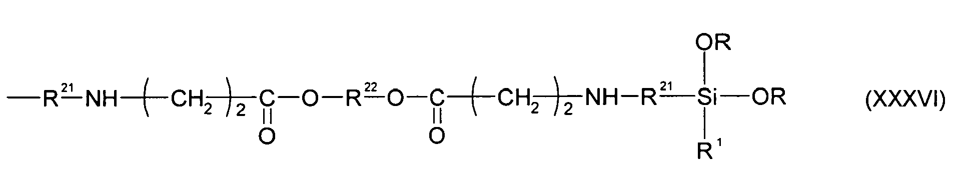 wherein R²¹ represents a linear or branched alkylene radical of 3 to 8 carbon atoms which may be interrupted by one or more -NH bridges and wherein R²² is a divalent radical of the formula 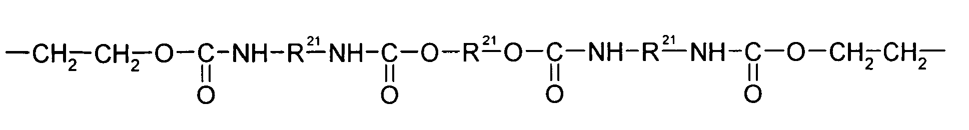 wherein each of the R²¹ radicals either has the abovementioned meaning or represents a radical of the formula 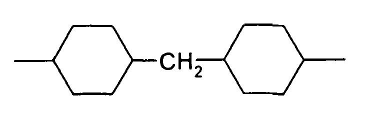 or wherein R²² represents a radical of formula 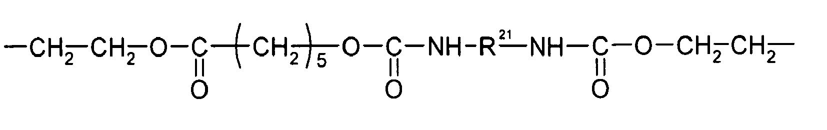 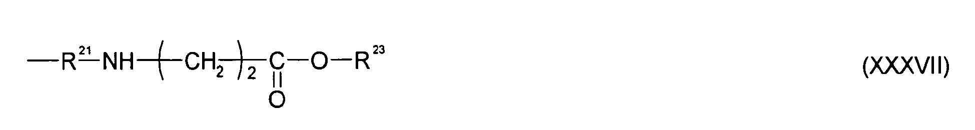 wherein R²³ represents a linear or branched alkyl radical of 8 to 18 carbon atoms, 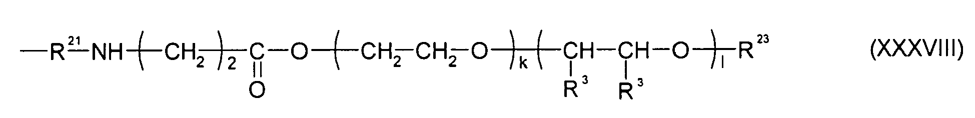 where, in the formula (XXXVIII), R²³ either has the abovementioned meaning or represents H or -CH₃,
wherein one of the R³ radicals represents H and the other represents CH₃, k and l are each from 1 to 31, preferably from 1 to 22, and the sum total of k + l is in the range from 3 to 45, preferably from 3 to 25, and where the individual units 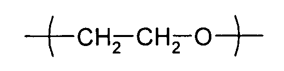 and 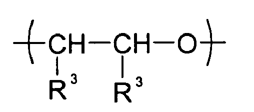 may be distributed across the chain in any desired manner, 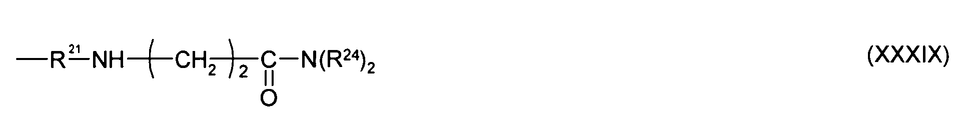 wherein each of the two R²⁴ radicals independently represents a linear or branched alkyl radical of 1 to 6 carbon atoms, 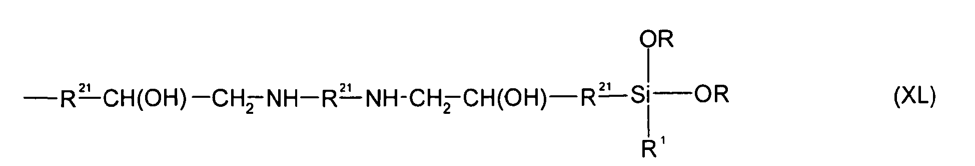 where, in the formula (XL), R²¹ either has the abovementioned meaning or represents a divalent radical of the formula 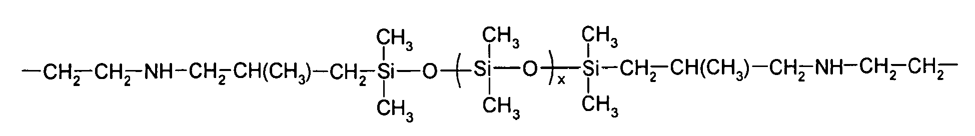 wherein x is from 0 to 1500, 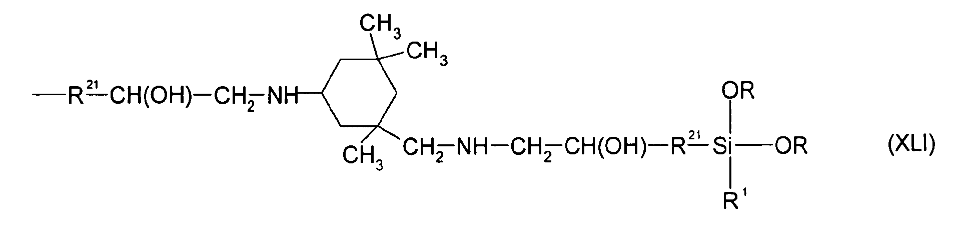 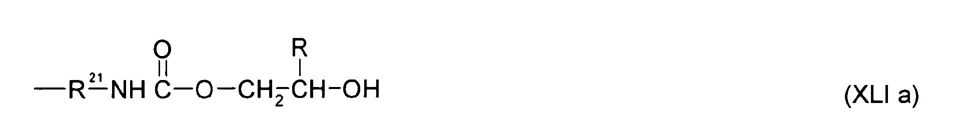 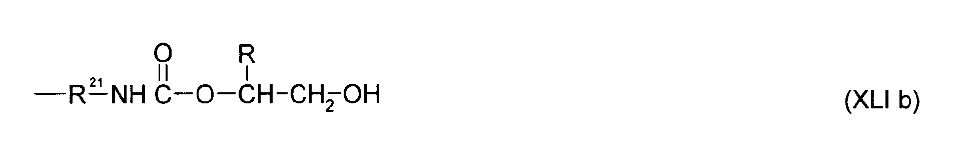 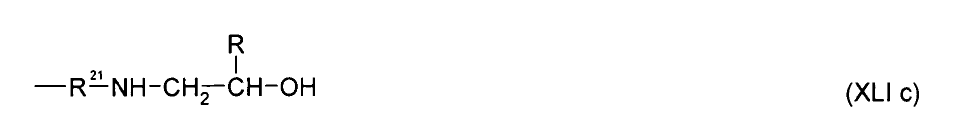 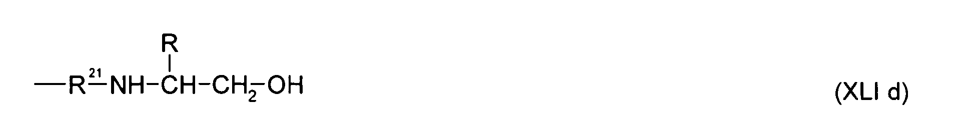 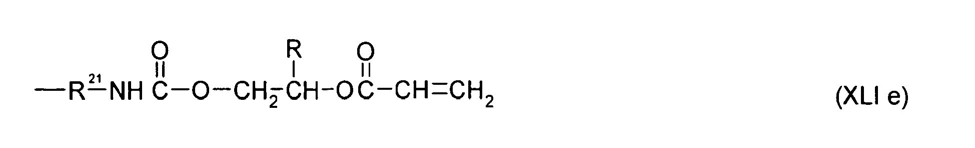 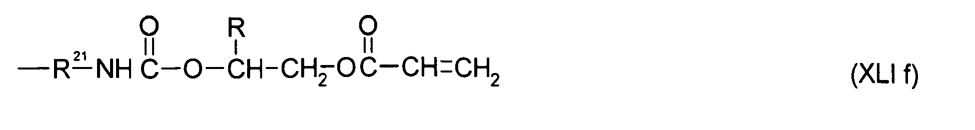 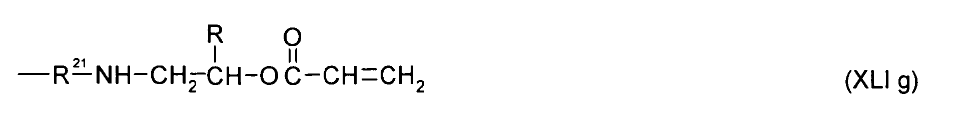 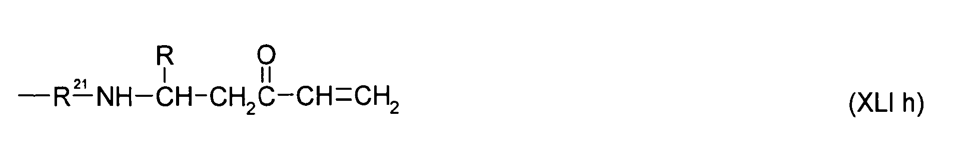 where the silane of the formula (XXXV) may also be a product formed by reaction of a silane of the formula 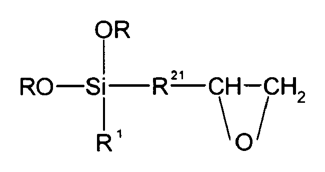 with a polyether amine or a product T, in which case the polyether amine is preferably a product of the formula 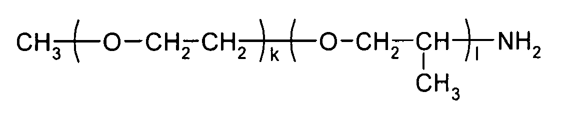 or of the formula 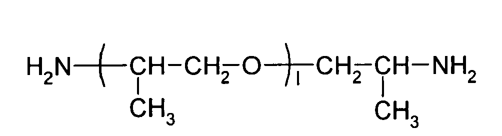 or of the formula 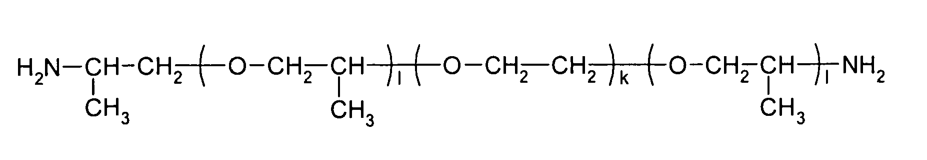 or of the formula 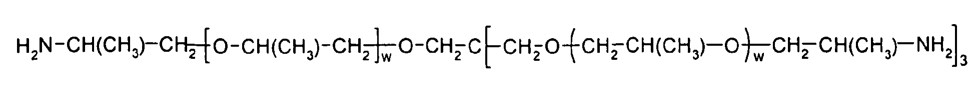 where w is from 2 to 8,
where k and l are each from 1 to 31, preferably from 1 to 22,
and the product T is a product of one of the formulae F₁ to F₃ 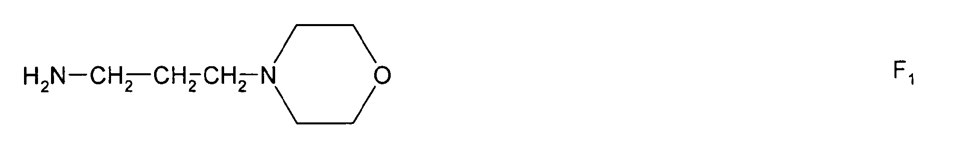 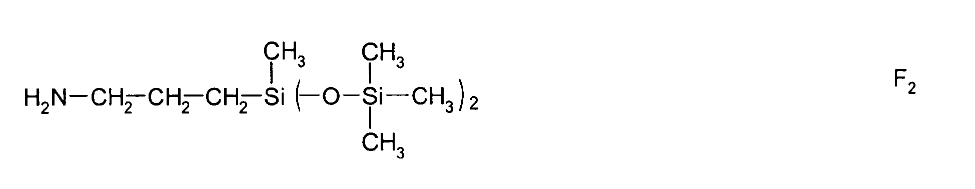 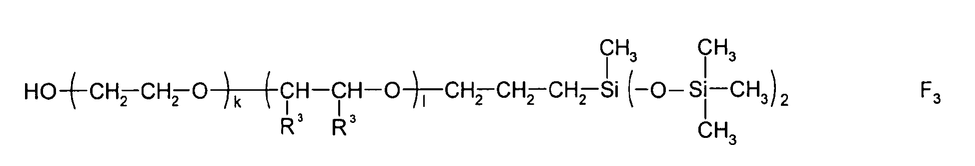 or where the product T is a 3-(2-aminoethyl)aminopropylmethylsilsesquioxane with terminal -OCH₃ group.

2. A polyorganosiloxane obtainable by reaction of a polyorganosiloxane of the formula (VIII) or of a mixture of polyorganosiloxanes of the formula (VIII) 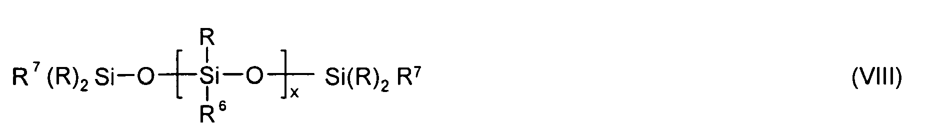 where R⁶ represents R or a radical of the formula (IX) 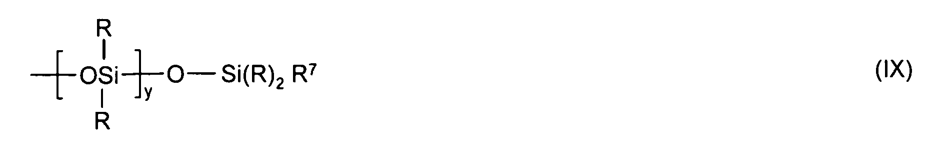 where x is from 0 to 1500, preferably from 10 to 1500,
y is from 0 to 500,
wherein all the R⁷ radicals present represent R or OH or OR and all R radicals have the meaning mentioned in claim 1,
with a silane of the formula (XXXV) or with a mixture of a silane of the formula (XXXV) and a silane of the formula (I) 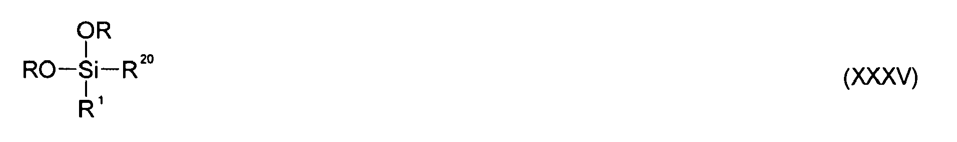 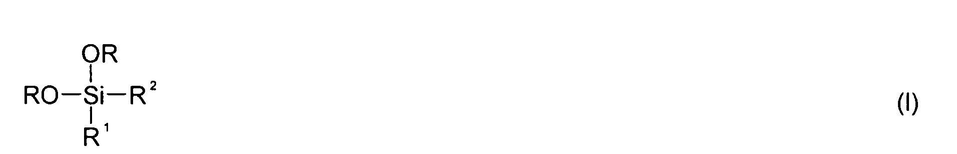 wherein R, R²⁰ and R¹ have the meanings mentioned in claim 1 and where R² represents vinyl or a linear or branched alkyl radical of 1 to 18 carbon atoms which may be substituted by one or more, optionally quaternized, amino groups, amido groups, mercapto groups, epoxy groups, phosphono groups, hydroxyl groups or fluorine atoms,
or where
R² represents a radical of the formula (II), of the formula (III) or of the formula (IV), 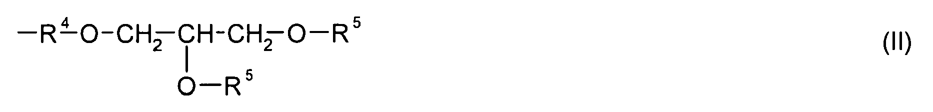 wherein both the R⁵ radicals represent 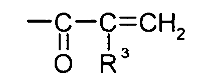 or one of the R⁵ radicals represents H and the other represents 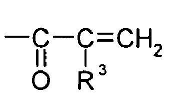 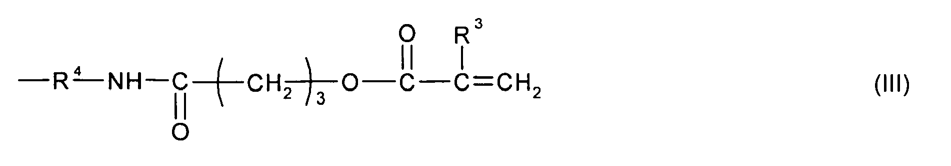 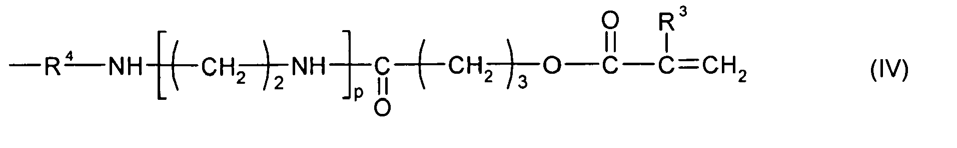 where p is 0, 1 or 2,
where R³ in each occurrence represents H or CH₃, or where R² represents a radical of the formula (V) 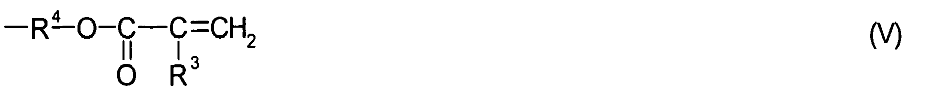 where, in the formulae (III), (IV) and (V), R⁴ in each occurrence represents a divalent linear or branched hydrocarbyl radical of 1 to 4 carbon atoms,
or where R² represents a radical of the formula (VI) or of the formula (VII) or of the formula (X) 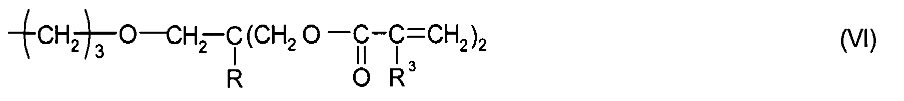 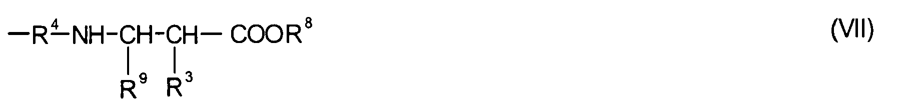 wherein R⁸ represents H or CH₃ or C₂H₅ or -CH₂CH₂-OH and R⁹ represents H or -COOR⁸ 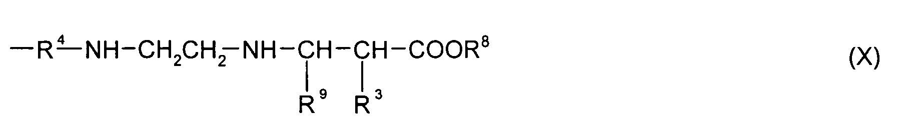 or wherein R² represents a radical of one of the formulae (XI), (XIa) or (XII) to (XX) or of the formula (XVIIIa) or of the formula (XXa) or of the formula (XXb) or of the formula (XXc), 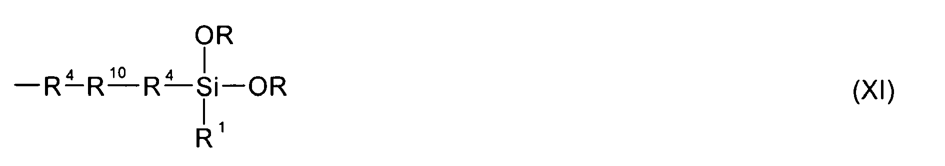 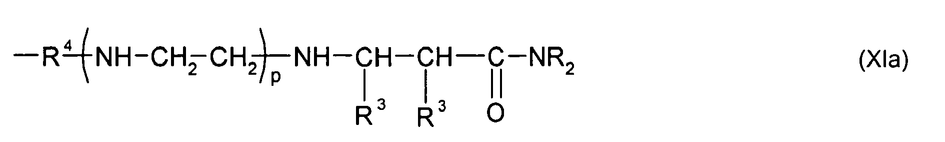 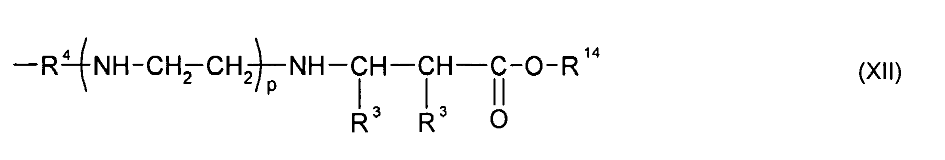 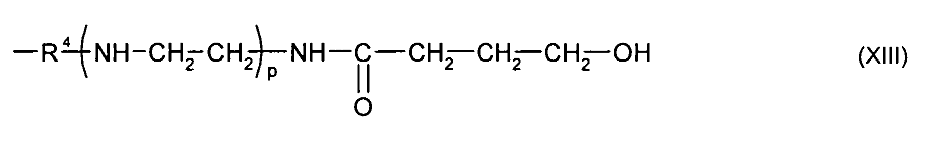 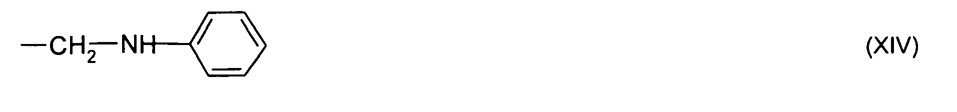 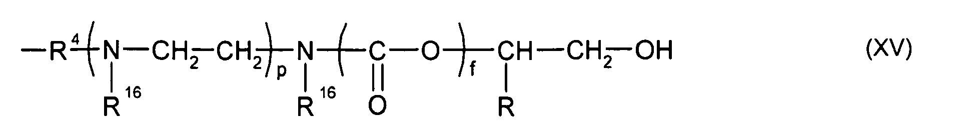 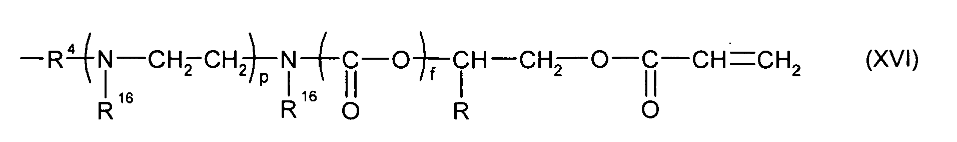 where p represents 0, 1 or 2,
in all the formulae R⁴ represents a divalent linear or branched hydrocarbyl radical of 1 to 4 carbon atoms,
R³ in each occurrence represents H or CH₃,
R¹⁴ represents H or a linear or branched alkyl radical of 1 to 18 carbon atoms or represents a radical of the formula (XIX),
wherein the individual units -(CH₂-CH₂-O)- and -(CHR³-CHR³-O)- can be distributed across the chain in any desired manner, wherein k and l are each from 1 to 31, preferably from 1 to 22, and the sum total of k+l is from 3 to 45, preferably from 3 to 25,
wherein f represents 0 or 1,
all the R¹⁶ radicals independently represent H or 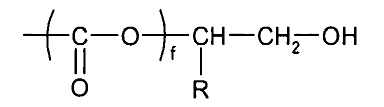 or 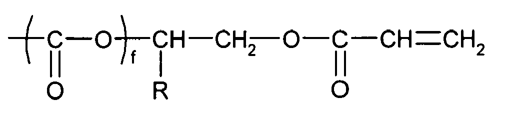 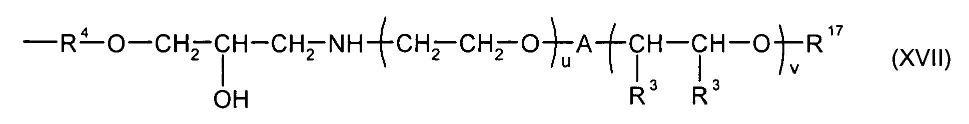 wherein A represents a direct bond or a divalent radical of the formula 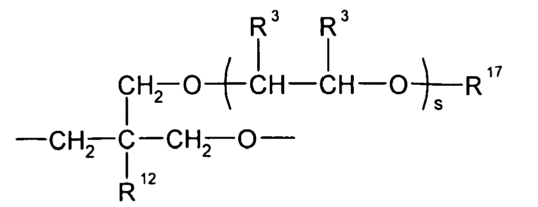 where, in the case of the formula (XVII), the values of u, v and s are so chosen that the equivalent weight of this R² radical is in the range from 100 to 5000, where one or two of u, v and s may also assume the value of 0 and where the individual units
-CH₂-CH₂-O-
and 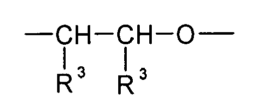 can be distributed across the chain in any desired manner,
where R¹² represents H or C₂H₅ and
where R¹⁷ represents R or -R⁴-NH₂ or 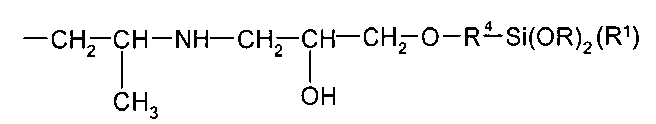 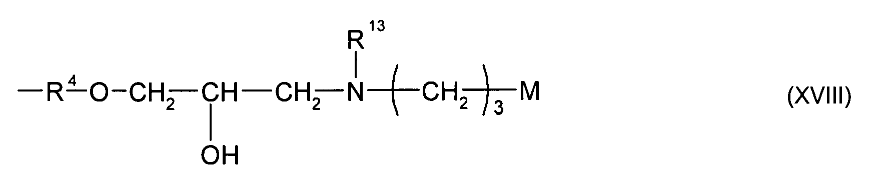 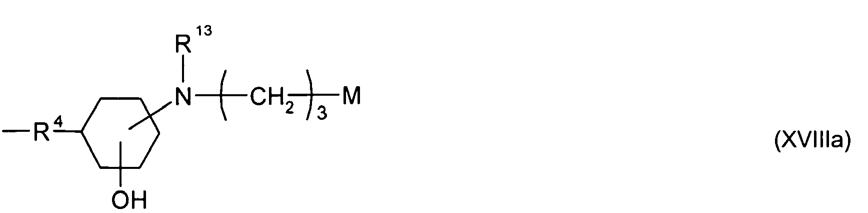 where M is selected from 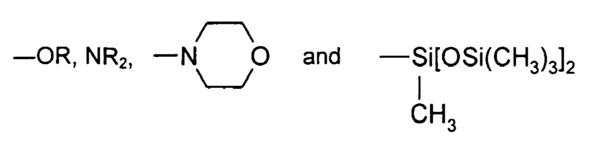 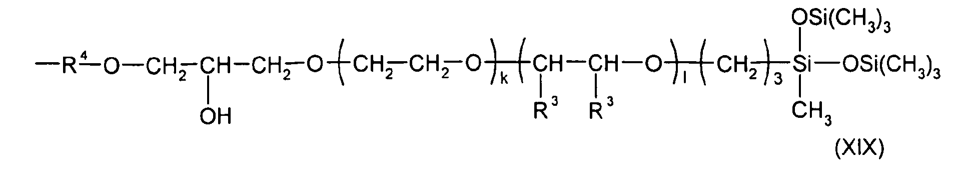 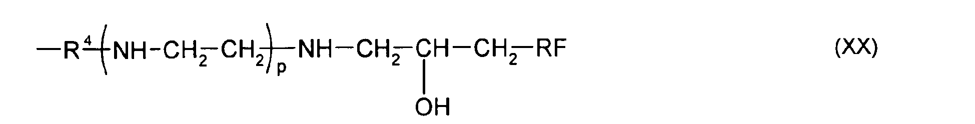 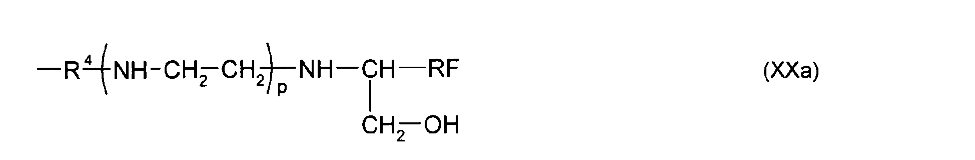 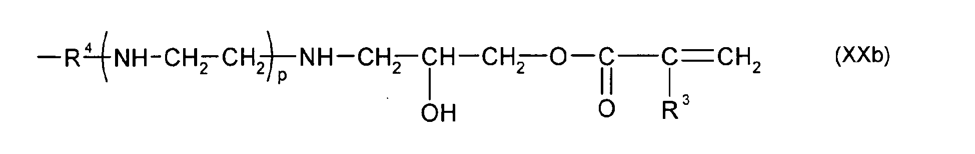 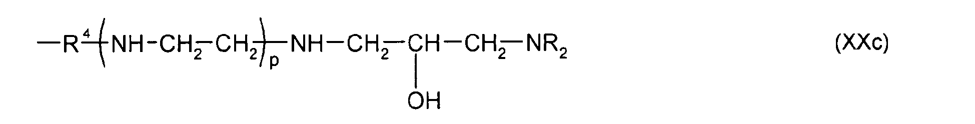 wherein RF represents a perfluoroalkyl radical of 5 to 23 carbon atoms,
wherein R¹⁰ represents a divalent radical of one of the formulae (XXI) to (XXIVa), 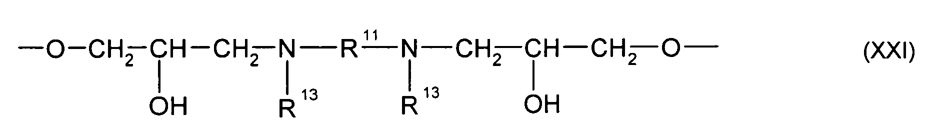 wherein R¹³ represents H or -CH(CH₃)₂ or -CH₂-CH(CH₃)₂, 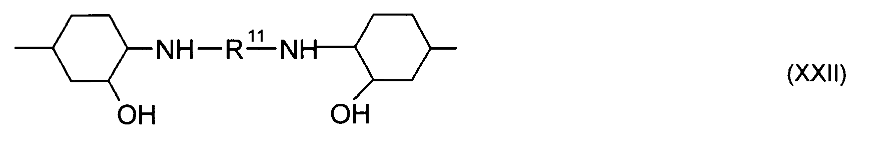 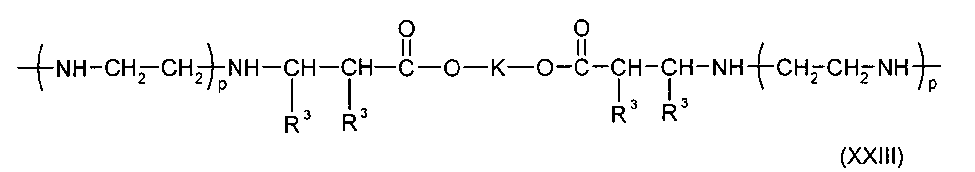 wherein K represents a linear or branched alkylene radical of 2 to 18 carbon atoms, 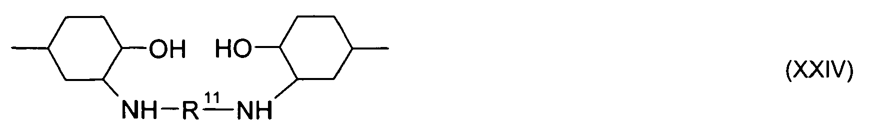 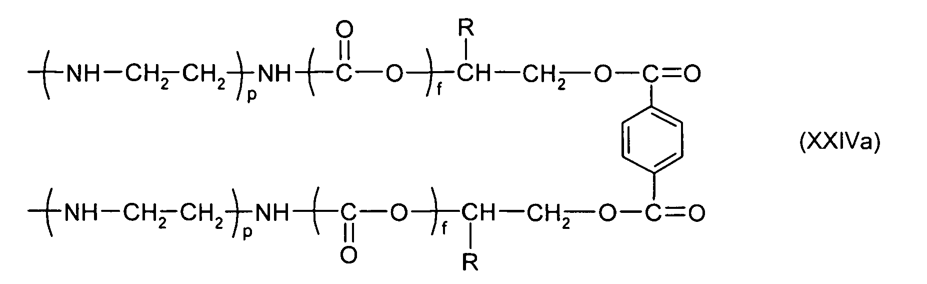 wherein f represents 0 or 1,
where each of the R¹¹ radicals represents 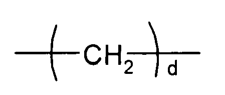 wherein d is from 1 to 6,
or represents a radical of one of the formulae (XXV) to (XXXI) 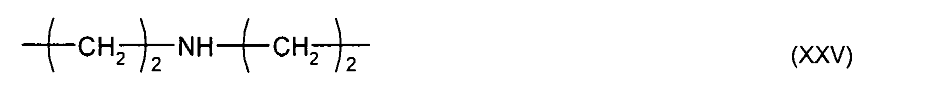 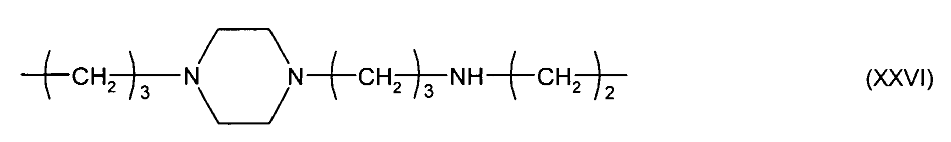 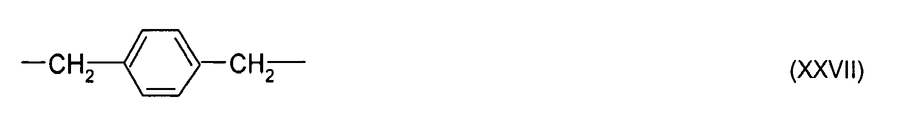 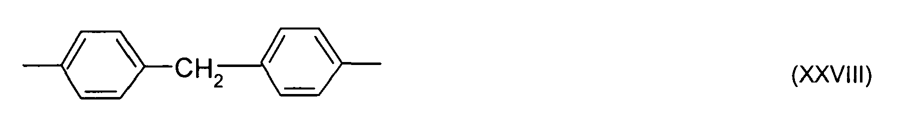 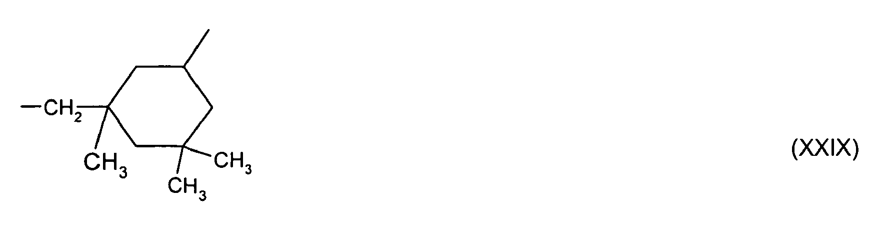 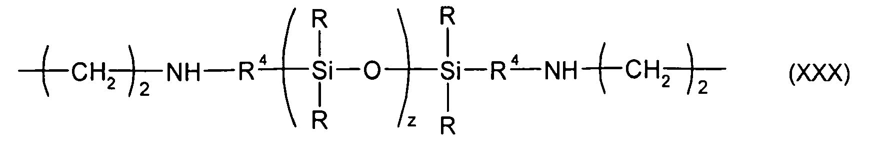 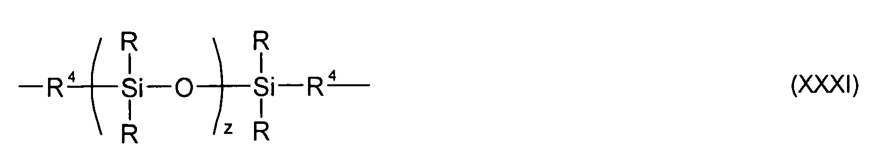 wherein z is from 8 to 500, preferably from 8 to 20,
where all or some of the nitrogen atoms which are present in the abovementioned formulae and which are not part of an amide group may be present in quaternized form.

3. The polyorganosiloxane according to claim 2, **characterized in that** a polydimethylsiloxane is used as polyorganosiloxane of the formula (VIII) for the reaction with silane.

4. The polyorganosiloxane according to claim 2 or 3, **characterized in that** from 1 to 10 000 mol of polyorganosiloxane are used per mole of silane in the reaction, preferably from 5 to 1000 mol.

5. The use of the polyorganosiloxane according to claim 2, 3 or 4 in the treatment of fiber materials, in particular in the treatment of textile fabrics.

## Patentansprüche

1. Monomeres Silan der allgemeinen Strukturformel (XXXV) 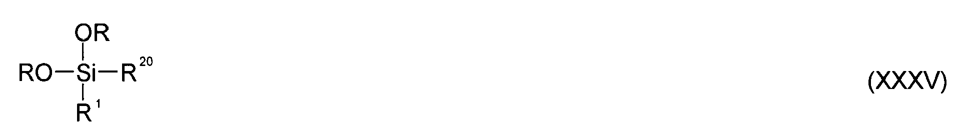 worin alle Reste R unabhängig voneinander für den Phenylrest oder für einen verzweigten oder unverzweigten Alkylrest mit 1 bis 18 Kohlenstoffatomen, vorzugsweise für -CH₃ oder -CH₂-CH₃ stehen, worin R¹ für R oder für OR oder für 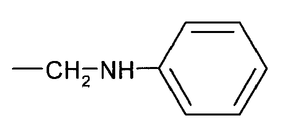 steht,
worin R²⁰ für einen Rest einer der Formeln (XXXVI) bis (XLI) oder einer der Formeln (XLI a) bis (XLI h) steht 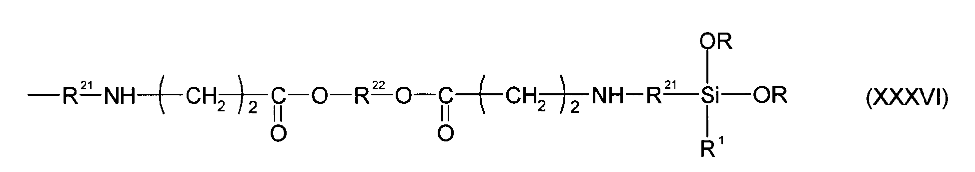 worin R²¹ für einen linearen oder verzweigten Alkylenrest mit 3 bis 8 Kohlenstoffatomen steht, der durch eine oder mehrere -NH-Brücken unterbrochen sein kann, und worin R²² ein zweiwertiger Rest der Formel 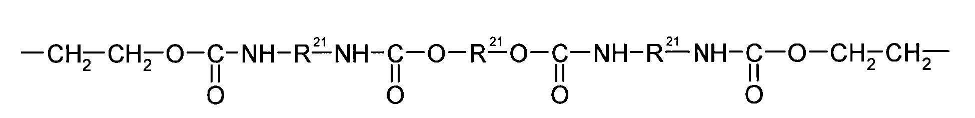 ist,
worin jeder der Reste R²¹ entweder die oben genannte Bedeutung besitzt oder für einen Rest der Formel 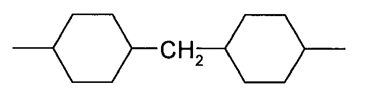 steht,
oder worin R²² für einen Rest der Formel 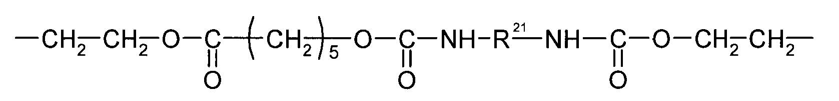 steht 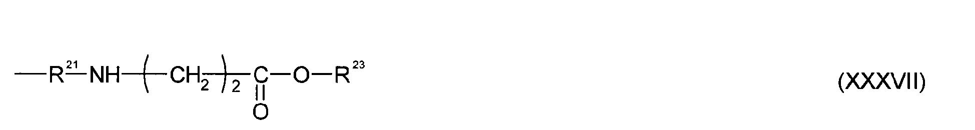 worin R²³ für einen linearen oder verzweigten Alkylrest mit 8 bis 18 Kohlenstoffatomen steht, 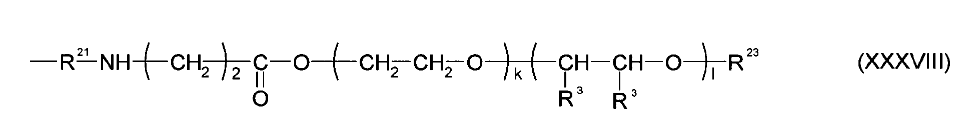 wobei in Formel (XXXVIII) R²³ entweder die oben genannte Bedeutung besitzt oder für H oder für -CH₃ steht,
worin einer der Reste R³ für H und der andere für CH₃ steht, k und l jeweils für eine Zahl von 1 bis 31, vorzugsweise von 1 bis 22 stehen und wobei die Summe k + l im Bereich von 3 bis 45, vorzugsweise von 3 bis 25 liegt und wobei die einzelnen Einheiten 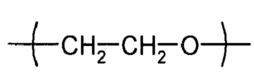 und 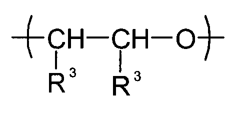 beliebig über die Kette verteilt sein können, 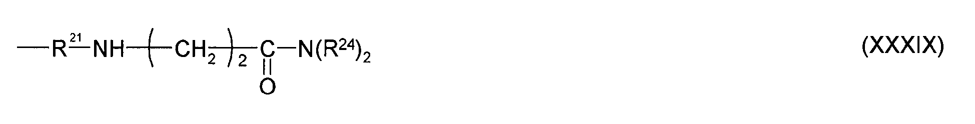 worin jeder der beiden Reste R²⁴ unabhängig voneinander für einen linearen oder verzweigten Alkylrest mit 1 bis 6 Kohlenstoffatomen steht, 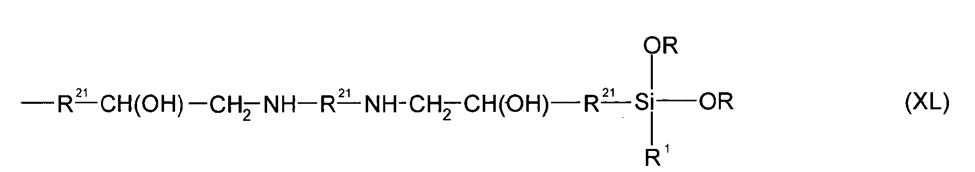 wobei in Formel (XL) R²¹ entweder die oben genannte Bedeutung besitzt oder für einen zweiwertigen Rest der Formel 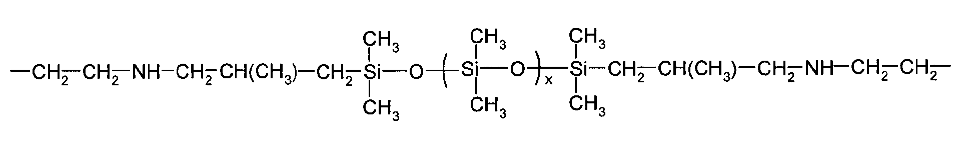 steht, worin x eine Zahl von 0 bis 1500 ist, 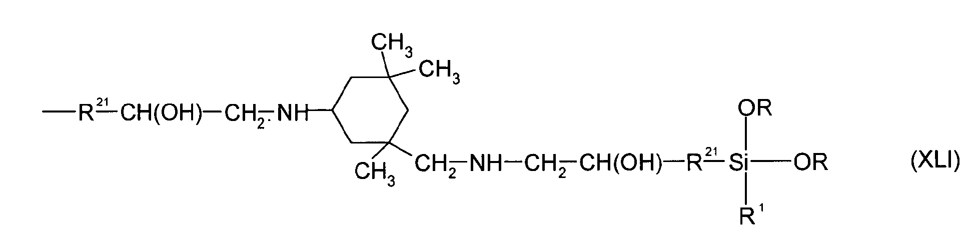 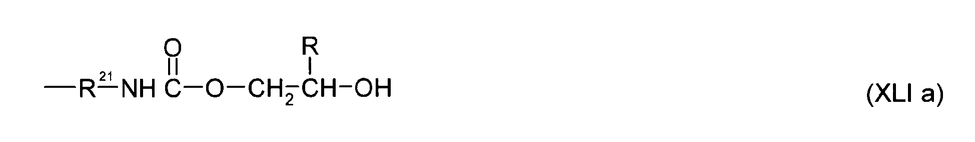 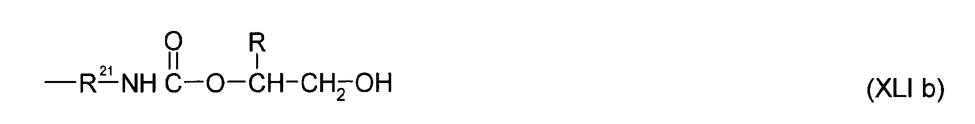 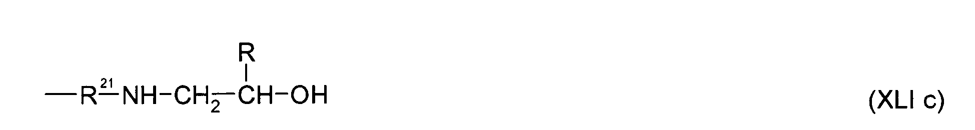 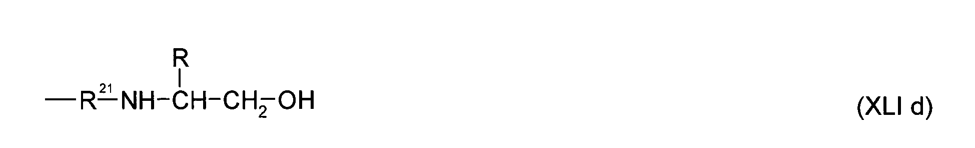 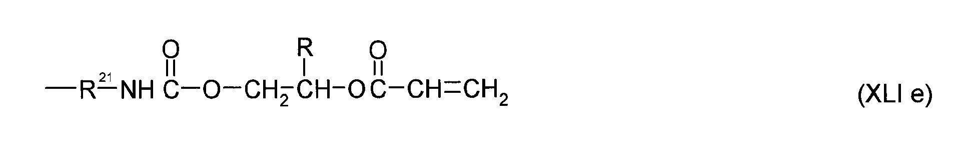 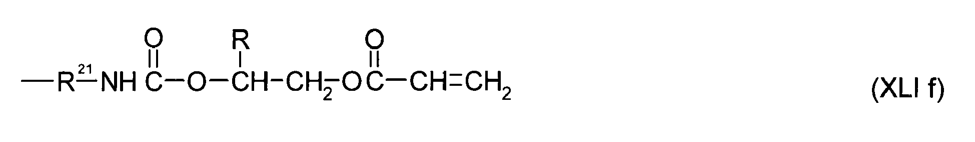 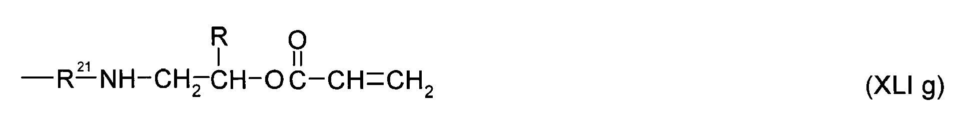 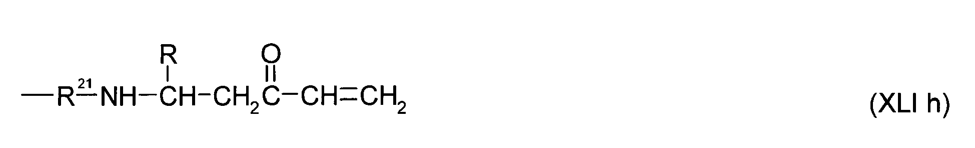 wobei das Silan der Formel (XXXV) auch ein Produkt sein kann, das durch Umsetzung eines Silans der Formel 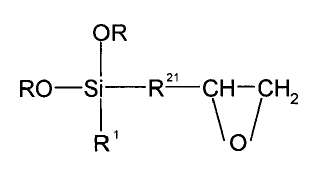 mit einem Polyetheramin oder einem Produkt T entsteht, wobei das Polyetheramin vorzugsweise ein Produkt der Formel 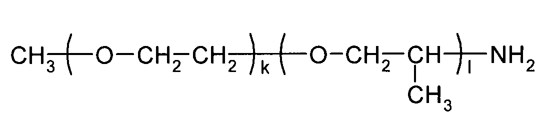 oder der Formel 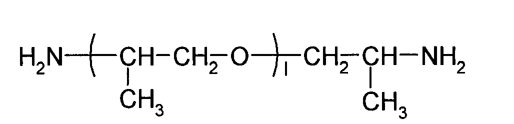 oder der Formel 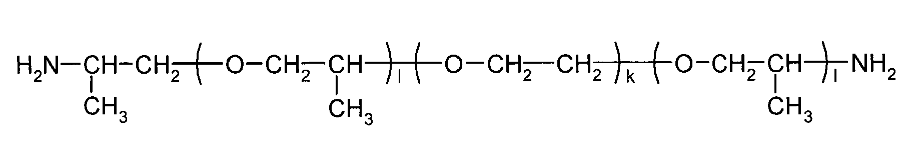 oder der Formel 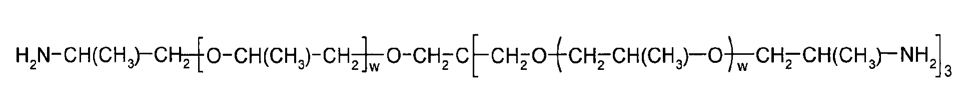 ist,
wobei w eine Zahl von 2 bis 8 ist,
wobei k und l jeweils einen Wert von 1 bis 31, vorzugsweise von 1 bis 22 besitzen und das Produkt T ein Produkt einer der Formeln F₁ bis F₃ ist 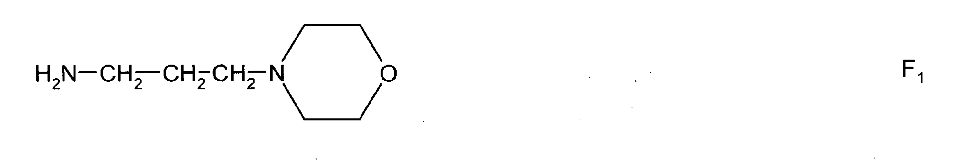 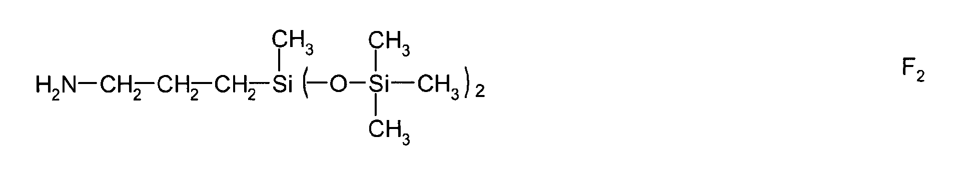 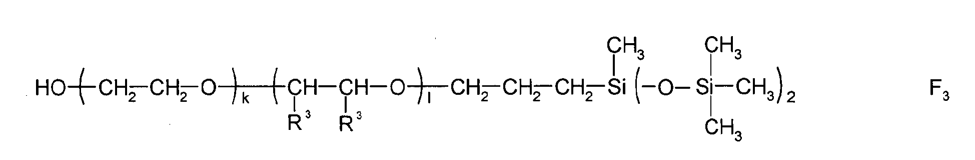 oder wobei das Produkt T ein 3-(2-aminoethyl)-aminopropyl-methyl-silsesquioxan mit endständiger -OCH₃-Gruppe ist.

2. Polyorganosiloxan, herstellbar durch Umsetzung eines Polyorganosiloxans der Formel (VIII) oder eines Gemischs von Polyorganosiloxanen der Formel (VIII) 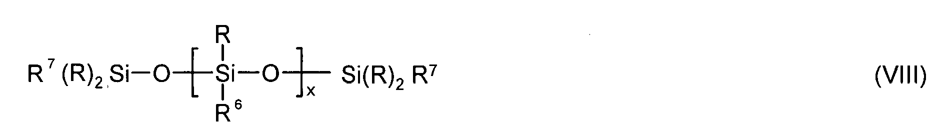 wobei R⁶ für R oder für einen Rest der Formel (IX) steht 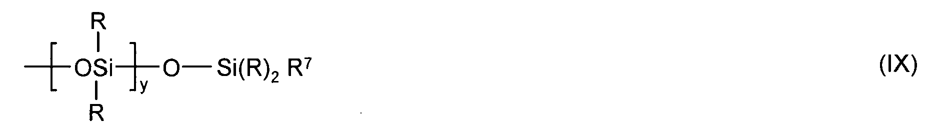 wobei x eine Zahl von 0 bis 1500 ist, vorzugsweise von 10 bis 1500,
y eine Zahl von 0 bis 500 ist,
worin alle anwesenden Reste R⁷ für R oder für OH oder für OR stehen und alle Reste R die in Anspruch 1 genannte Bedeutung besitzen,
mit einem Silan der Formel (XXXV) oder mit einem Gemisch eines Silans der Formel (XXXV) und eines Silans der Formel (I), 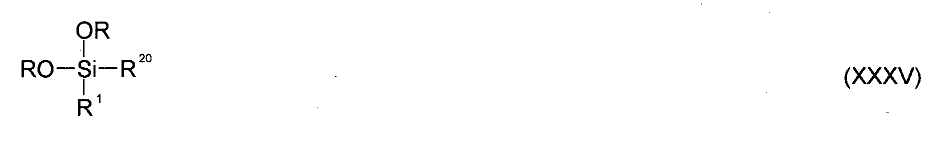 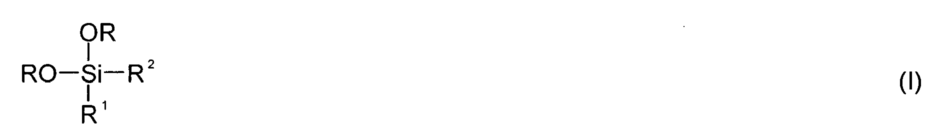 worin R, R²⁰ und R¹ die in Anspruch 1 genannten Bedeutungen besitzen und wobei R² für den Vinylrest oder für einen linearen oder verzweigten Alkylrest mit 1 bis 18 Kohlenstoffatomen steht, der durch eine oder mehrere, gegebenenfalls quaternierte, Aminogruppen, Amidogruppen, Mercaptogruppen, Epoxygruppen, Phosphonogruppen, Hydroxygruppen oder Fluoratome substituiert sein kann,
oder wobei
R² für einen Rest der Formel (II), der Formel (III) oder der Formel (IV) steht, 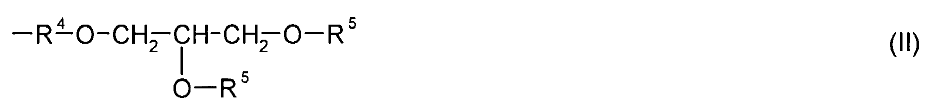 worin beide Reste R⁵ für 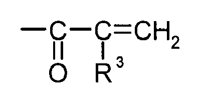 stehen, oder einer der Reste R⁵ für H und der andere für 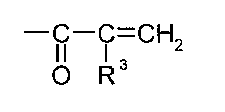 steht, 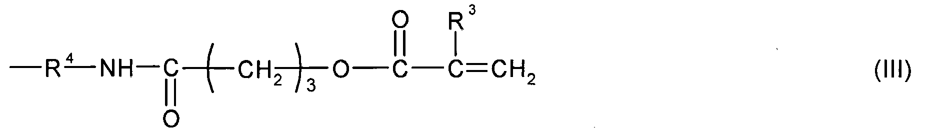 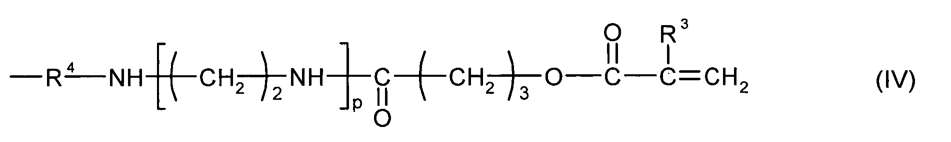 wobei p 0, 1 oder 2 ist,
wobei R³ jeweils für H oder CH₃ steht,
oder wobei R² für einen Rest der Formel (V) steht 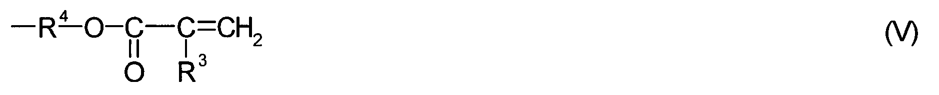 wobei in den Formeln (III), (IV) und (V) R⁴ jeweils für einen zweiwertigen linearen oder verzweigten Kohlenwasserstoffrest mit 1 bis 4 Kohlenstoffatomen steht,
oder wobei R² für einen Rest der Formel (VI) oder der Formel (VII) oder der Formel (X) steht 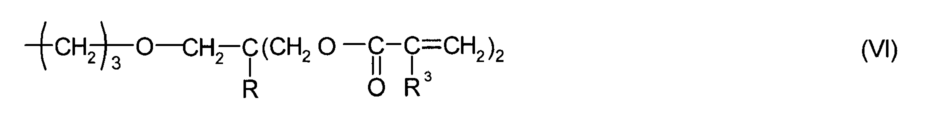 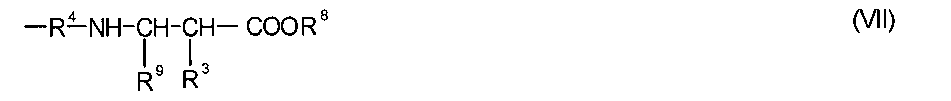 worin R⁸ für H oder für CH₃ oder für C₂H₅ oder für -CH₂CH₂-OH steht und R⁹ für H oder für -COOR⁸ steht 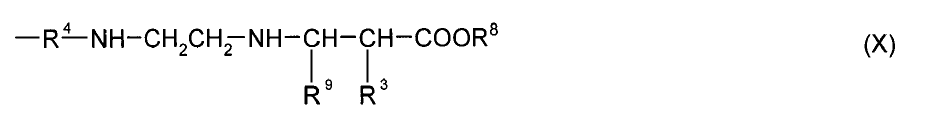 oder worin R² für einen Rest einer der Formeln (XI), (XIa) oder (XII) bis (XX) oder der Formel (XVIIIa) oder Formel (XXa) oder Formel (XXb) oder Formel (XXc) steht, 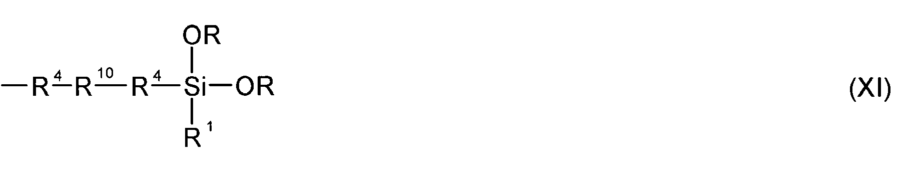 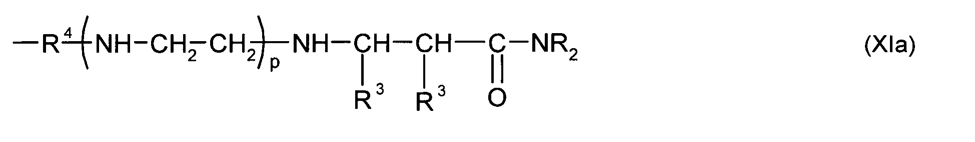 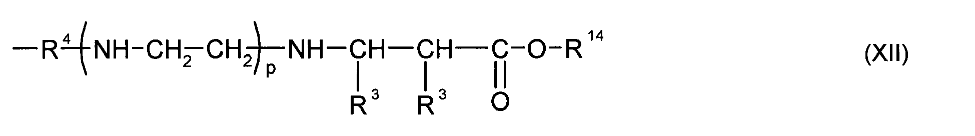 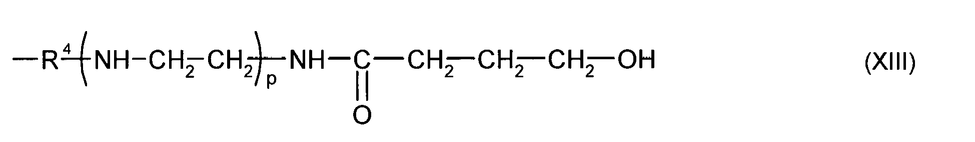 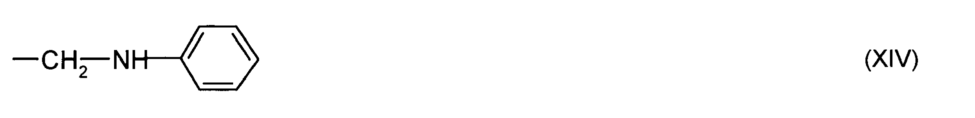 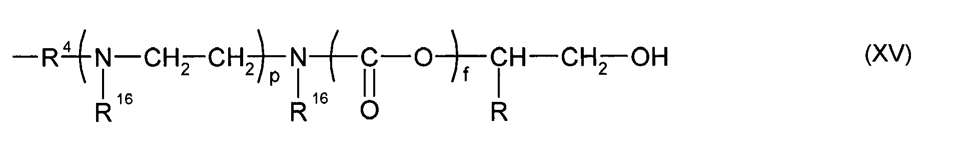 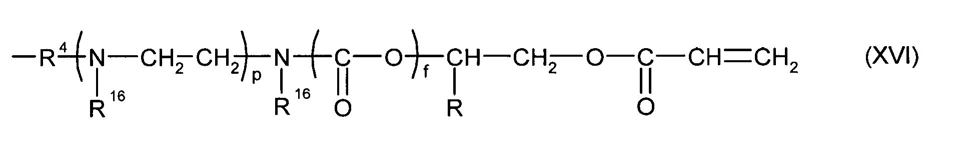 wobei p für 0, 1 oder 2 steht,
in allen Formeln R⁴ für einen zweiwertigen linearen oder verzweigten Kohlenwasserstoffrest mit 1 bis 4 Kohlenstoffatomen steht,
R³ jeweils für H oder CH₃ steht,
R¹⁴ für H oder einen linearen oder verzweigten Alkylrest mit 1 bis 18 Kohlenstoffatomen oder für einen Rest der Formel (XIX) steht,
worin die einzelnen Einheiten -(CH₂-CH₂-O)- und -(CHR³-CHR³-O)- beliebig über die Kette verteilt sein können, worin k und l jeweils eine Zahl im Bereich von 1 bis 31, vorzugsweise von 1 bis 22 sind und die Summe k+l im Bereich von 3 bis 45, vorzugsweise von 3 bis 25 liegt,
worin f für 0 oder 1 steht,
alle Reste R¹⁶ unabhängig voneinander für H oder für 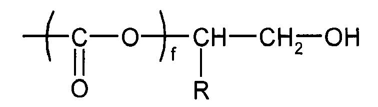 oder für 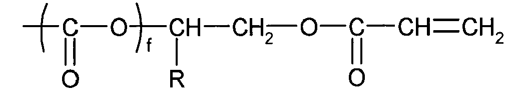 stehen, 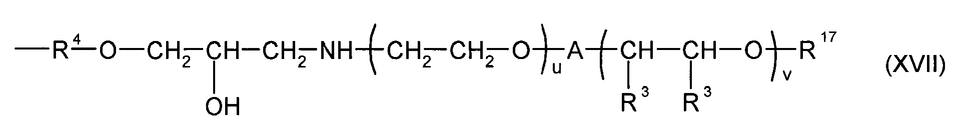 worin A für eine direkte Bindung oder für einen zweiwertigen Rest der Formel 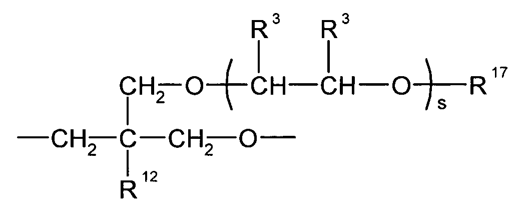 steht, wobei im Fall von Formel (XVII) die Werte von u, v und s so gewählt sind, dass das Äquivalentgewicht dieses Restes R² im Bereich von 100 bis 5000 liegt, wobei eins oder zwei von u, v und s auch den Wert 0 annehmen können und wobei die einzelnen Einheiten
-CH₂-CH₂-O-
und 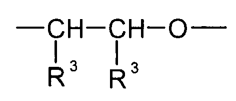 beliebig über die Kette verteilt sein können,
wobei R¹² für H oder C₂H₅ steht und
wobei R¹⁷ für R oder für -R⁴-NH₂ oder für 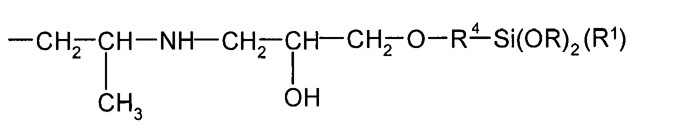 steht, 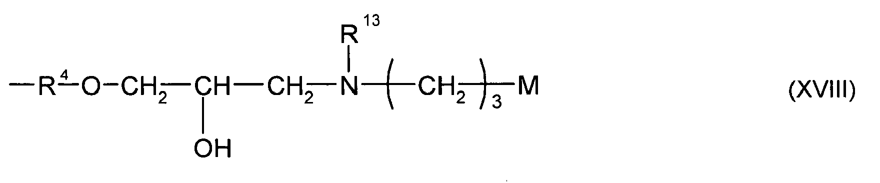 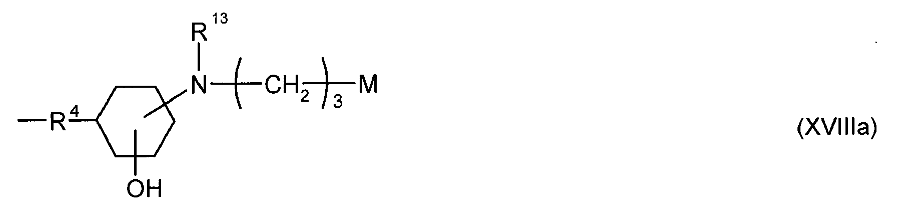 wobei M ausgewählt ist aus 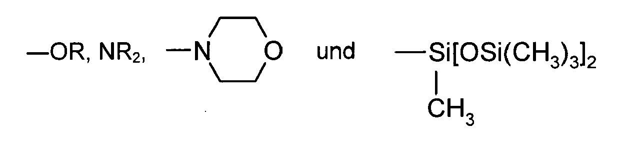 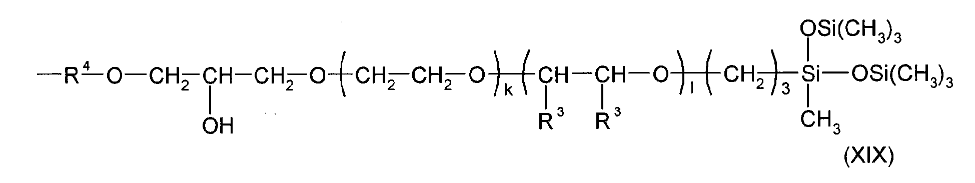 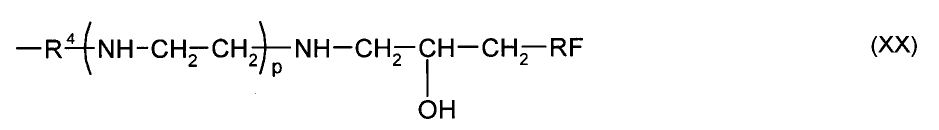 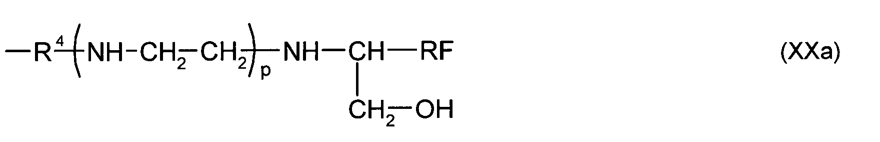 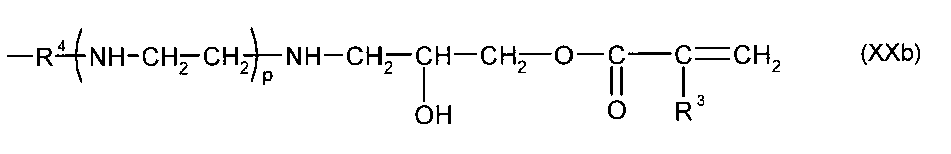 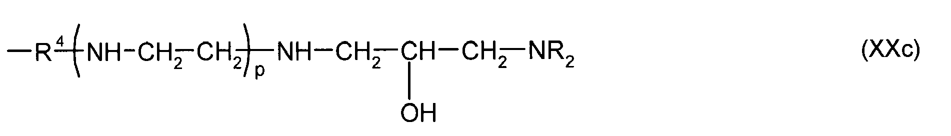 worin RF für einen Perfluoralkylrest mit 5 bis 23 Kohlenstoffatomen steht,
worin R¹⁰ für einen zweiwertigen Rest einer der Formeln (XXI) bis (XXIVa) steht, 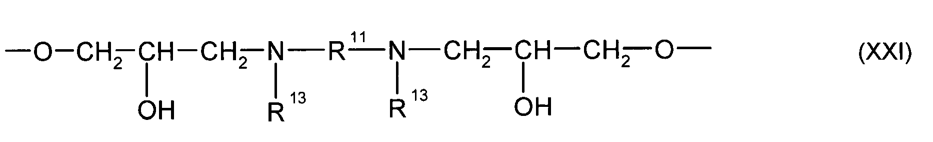 worin R¹³ für H oder -CH(CH₃)₂ oder für -CH₂-CH(CH₃)₂ steht, 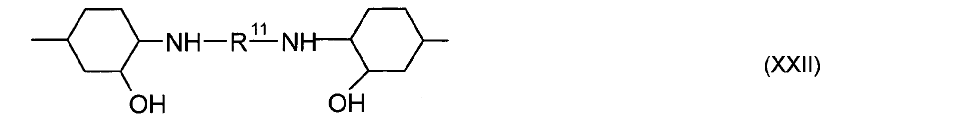 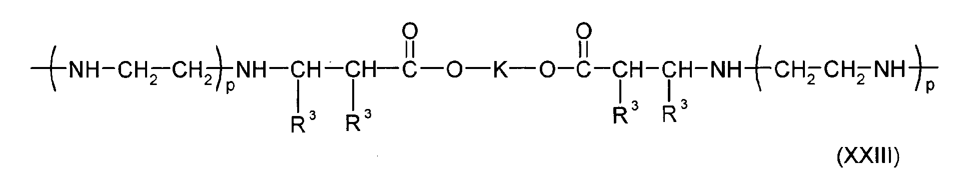 worin K für einen linearen oder verzweigten Alkylenrest mit 2 bis 18 Kohlenstoffatomen steht, 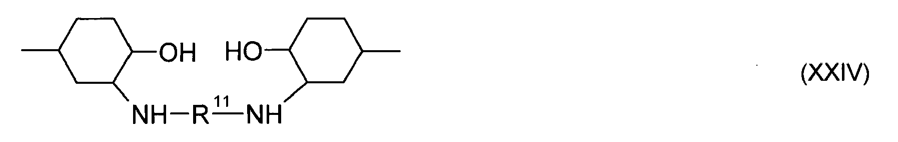 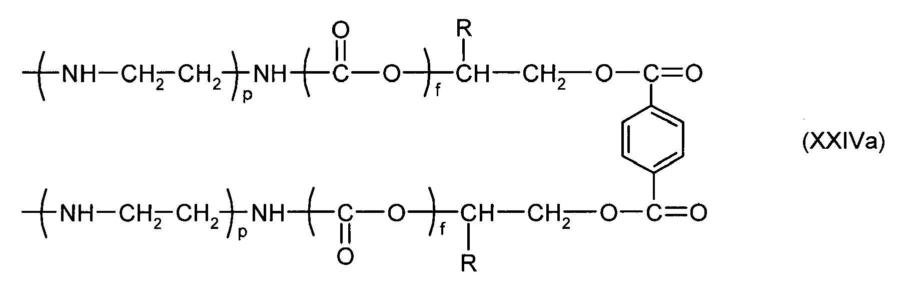 worin f für 0 oder 1 steht wobei jeder der Reste R¹¹ für 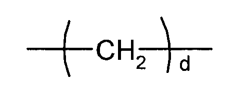 worin d eine Zahl von 1 bis 6 ist,
oder für einen Rest einer der Formeln (XXV) bis (XXXI) steht, 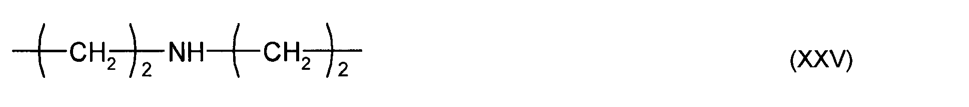 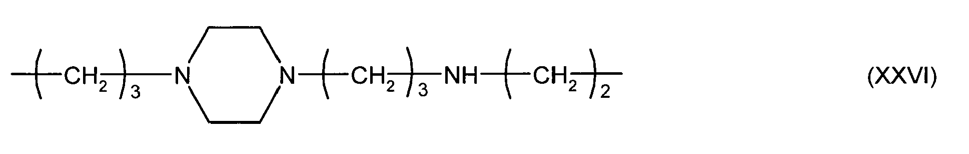 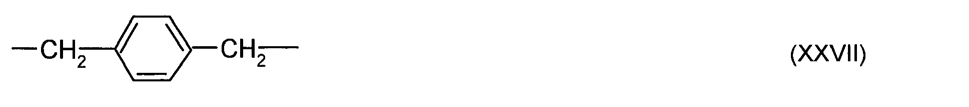 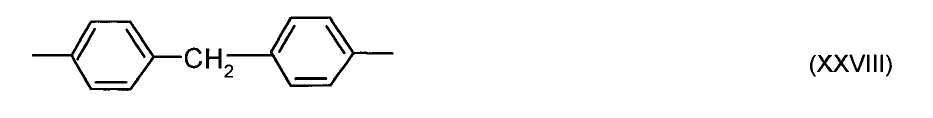 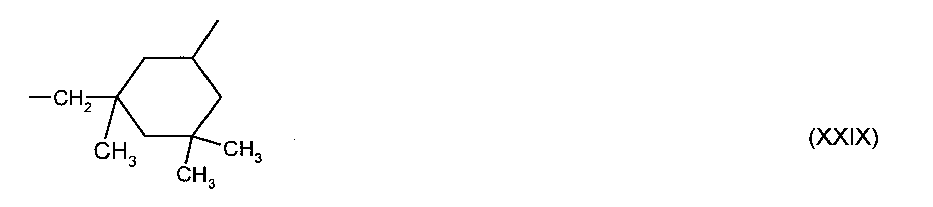 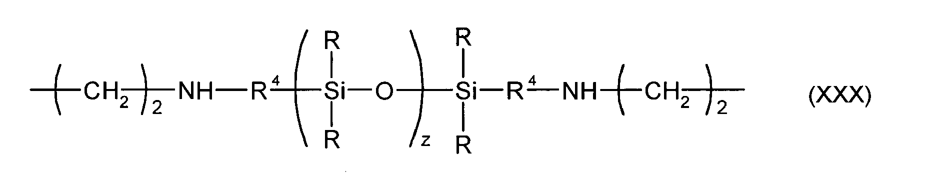 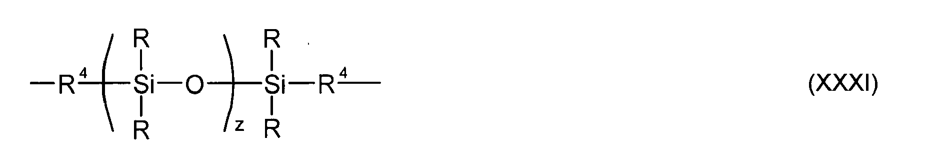 worin z eine Zahl von 8 bis 500, vorzugsweise von 8 bis 20, ist,
wobei alle oder ein Teil der Stickstoffatome, welche in den oben genannten Formeln vorhanden sind und die nicht Teil einer Amidgruppe sind, in quaternisierter Form vorliegen können.

3. Polyorganosiloxan nach Anspruch 2, **dadurch gekennzeichnet, dass** für die Umsetzung mit Silan als Polyorganosiloxan der Formel (VIII) ein Polydimethylsiloxan verwendet wird.

4. Polyorganosiloxan nach Anspruch 2 oder 3, **dadurch gekennzeichnet, dass** bei der Umsetzung 1 bis 10000 Mol an Polyorganosiloxan pro Mol an Silan eingesetzt werden, vorzugsweise 5 bis 1000 Mol.

5. Verwendung des Polyorganosiloxans gemäß Anspruch 2, 3 oder 4 für die Behandlung von Fasermaterialien, insbesondere von textilen Flächengebilden.

## Revendications

1. Silane monomère de la formule structurale générale (XXXV) : 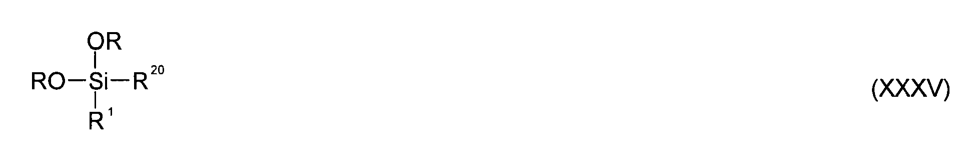 où tous les radicaux R représentent indépendamment phényle ou un radical alkyle ramifié ou non ramifié de 1 à 18 atomes de carbone, de préférence représentent -CH₃ ou -CH₂-CH₃, où R¹ représente R ou OR ou 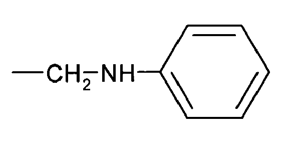 où R²⁰ représente un radical de l'une des formules (XXXVI) à (XLI) ou l'une des formules (XLI a) à (XLI h) : 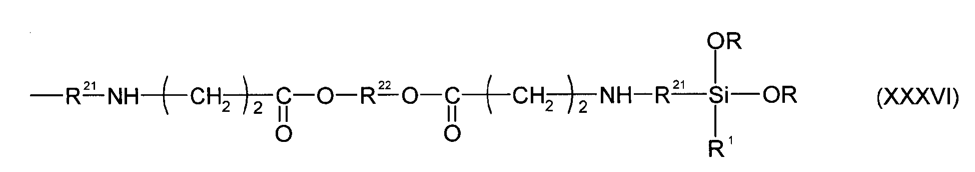 où R²¹ représente un radical alkylène linéaire ou ramifié de 3 à 8 atomes de carbone qui peut être interrompu par un ou plusieurs ponts -NH et où R²² représente un radical divalent de la formule : 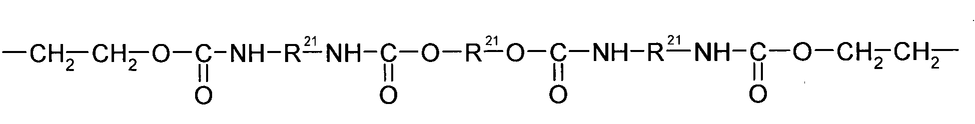 où chacun des radicaux R²¹ soit a la signification mentionnée ci-dessus soit représente un radical de la formule : 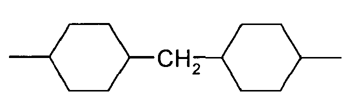 ou où R²² représente un radical de formule : 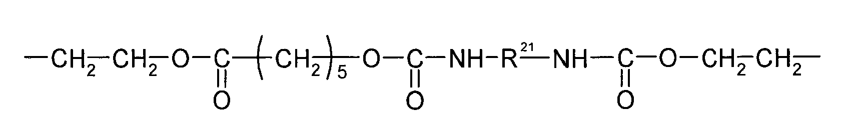 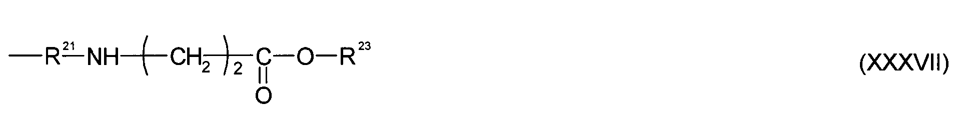 où R²³ représente un radical alkyle linéaire ou ramifié de 8 à 18 atomes de carbone, 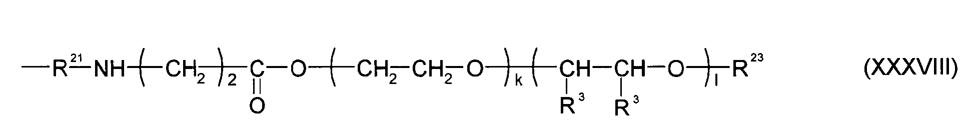 où, dans la formule (XXXVIII), R²³ soit a la signification mentionnée ci-dessus soit représente H ou -CH₃,
où l' un des radicaux R³ représente H et l'autre représente CH₃, k et l sont chacun de 1 à 31, de préférence de 1 à 22, et la somme totale de k + l se situe dans la plage de 3 à 45, de préférence de 3 à 25, et où les unités individuelles : 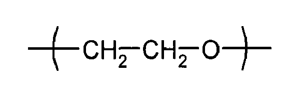 et 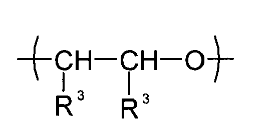 peuvent être distribuées à travers la chaîne de n'importe quelle manière souhaitée, 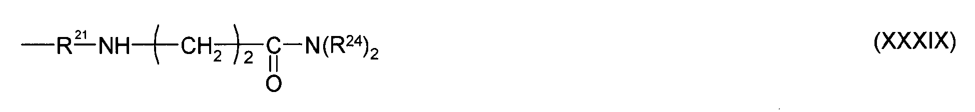 où chacun des deux radicaux R²⁴ représente indépendamment un radical alkyle linéaire ou ramifié de 1 à 6 atomes de carbone, 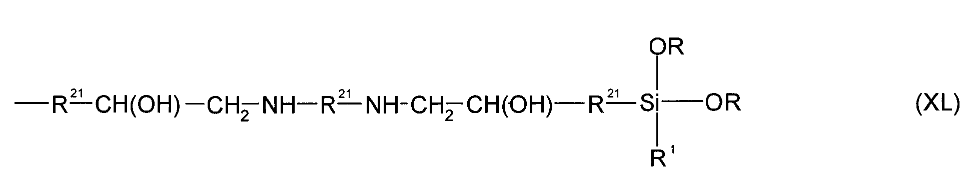 où, dans la formule (XL), R²¹ soit a la signification mentionnée ci-dessus soit représente un radical divalent de la formule : 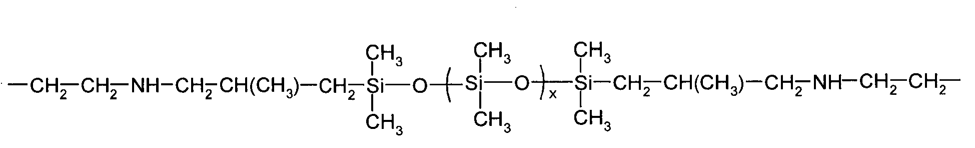 où x est de 0 à 1500, 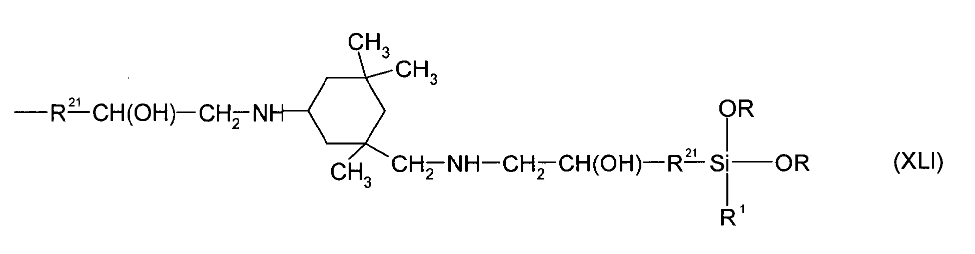 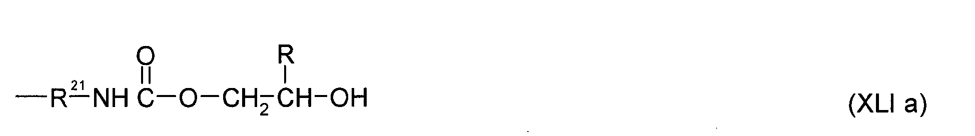 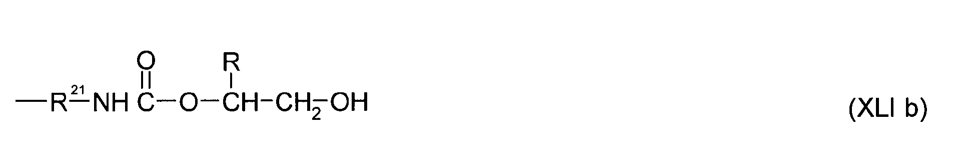 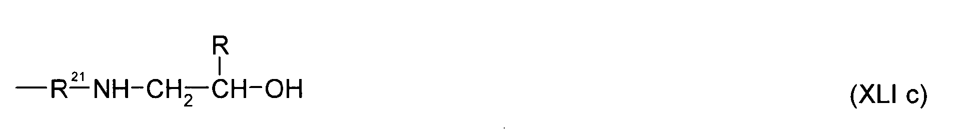 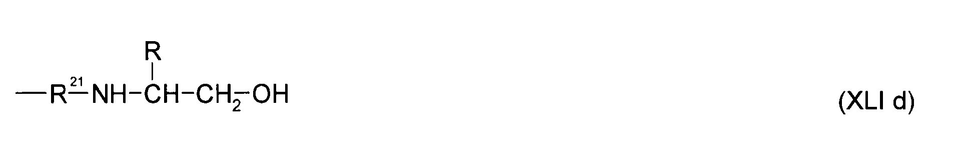 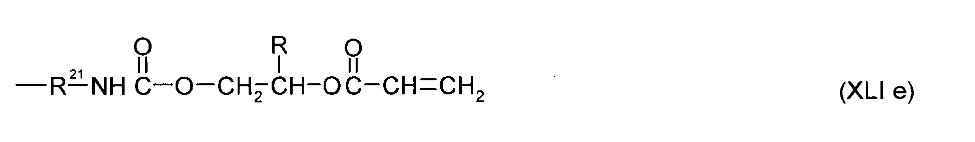 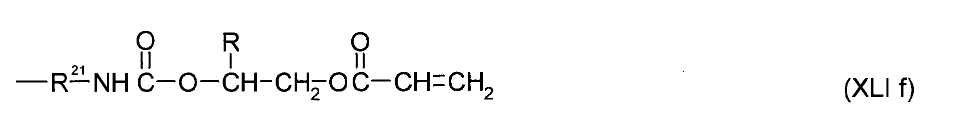 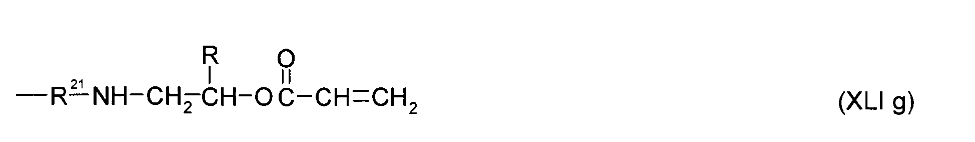 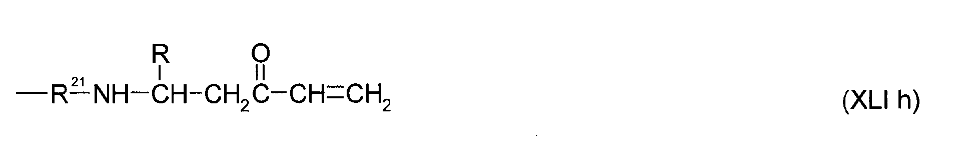 où le silane de la formule (XXXV) peut également être un produit formé par réaction d'un silane de la formule : 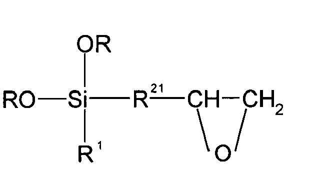 avec une polyéther amine ou un produit T, auquel cas la polyéther amine est, de préférence, un produit de la formule : 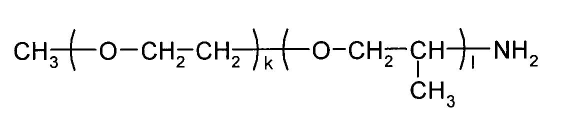 ou de la formule : 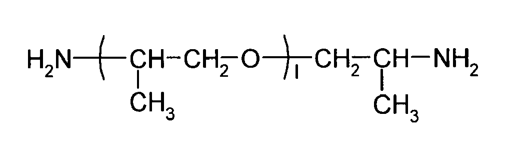 ou de la formule : 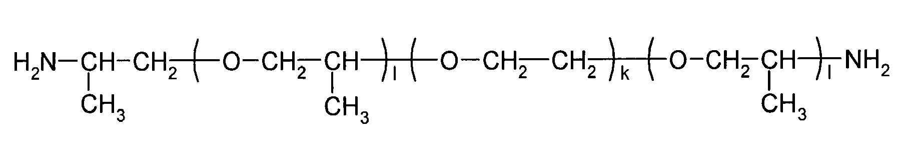 ou de la formule : 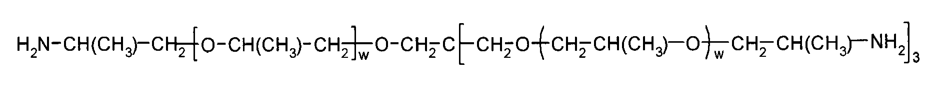 où w est de 2 à 8,
où k et l sont chacun de 1 à 31, de préférence de 1 à 22,
et le produit T est un produit de l'une des formules F₁ à F₃ : 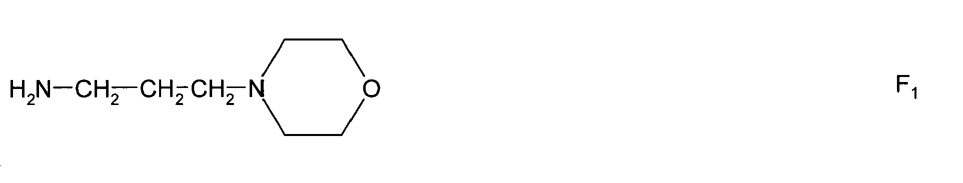 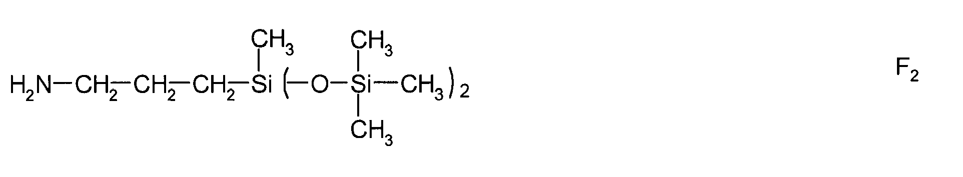 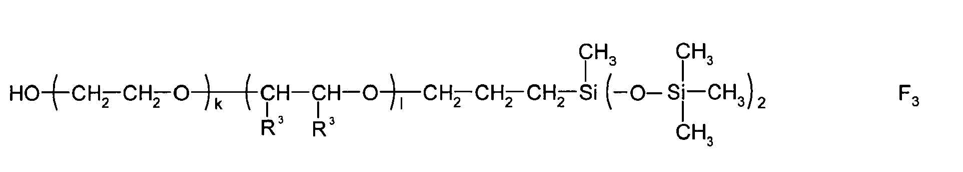 ou où le produit T est un 3-(2-aminoéthyl) aminopropylméthylsilsesquioxane ayant un groupe -OCH₃ terminal.

2. Polyorganosiloxane pouvant être obtenu par réaction d'un polyorganosiloxane de la formule (VIII) ou d'un mélange de polyorganosiloxanes de la formule (VIII) : 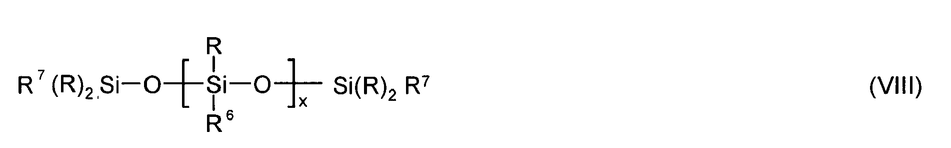 où R⁶ représente R ou un radical de la formule (IX) : 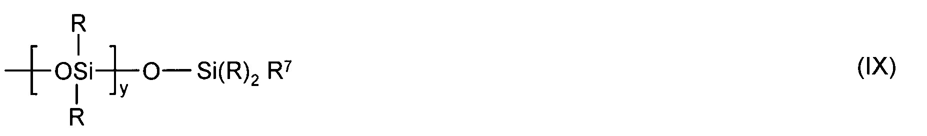 où x est de 0 à 1500, de préférence de 10 à 1500,
y est de 0 à 500,
où tous les radicaux R⁷ présents représentent R ou OH ou OR et tous les radicaux R ont la signification mentionnée dans la revendication 1,
avec un silane de la formule (XXXV) ou avec un mélange d'un silane de la formule (XXXV) et d'un silane de la formule (I) : 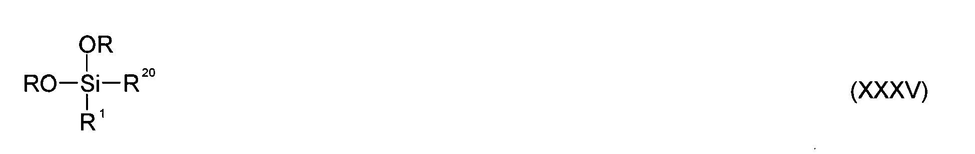 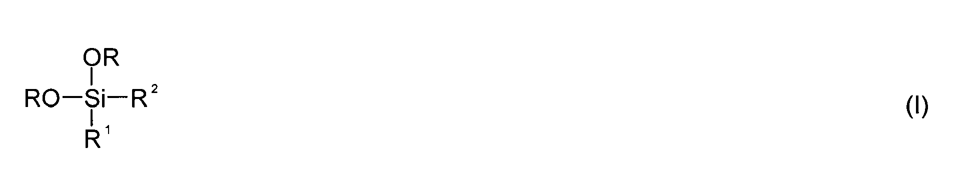 où R, R²⁰ et R¹ ont les significations mentionnées dans la revendication 1 et où R² représente vinyle ou un radical alkyle linéaire ou ramifié de 1 à 18 atomes de carbone qui peut être substitué par un ou plusieurs groupes amino facultativement quaternisés, groupes amido, groupes mercapto, groupes époxy, groupes phosphono, groupes hydroxyle ou atomes de fluor,
ou où
R² représente un radical de la formule (II), de la formule (III) ou de la formule (IV) : 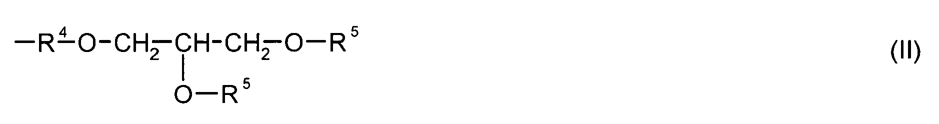 où les deux radicaux R⁵ représentent : 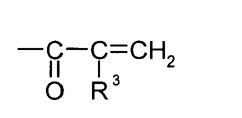 ou l'un des radicaux R⁵ représente H et l'autre représente : 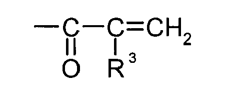 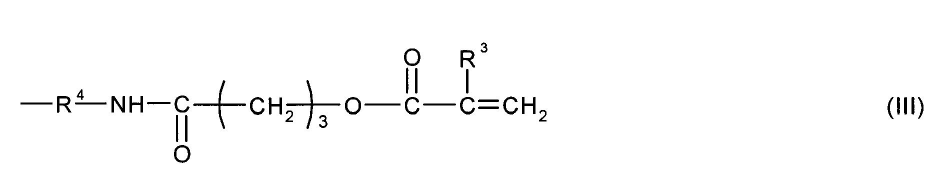 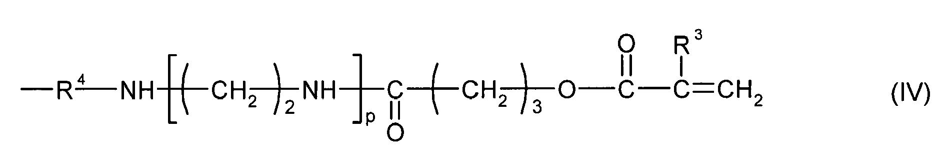 où p est 0, 1 ou 2,
où R³ à chaque occurrence représente H ou CH₃,
ou où R² représente un radical de la formule (V) : 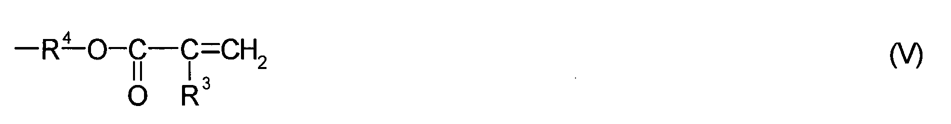 où, dans les formules (III), (IV) et (V), R⁴ à chaque occurrence représente un radical hydrocarbyle, linéaire ou ramifié, divalent, de 1 à 4 atomes de carbone,
ou où R² représente un radical de la formule (VI) ou de formule (VII) ou de la formule (X) : 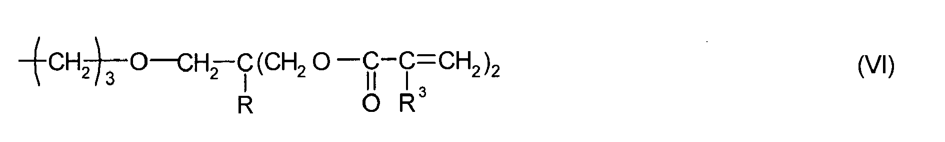 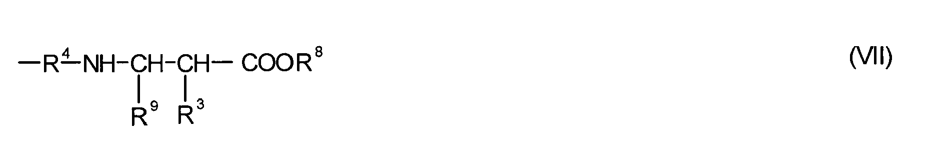 où R⁸ représente H ou CH₃ ou C₂H₅ ou -CH₂CH₂-OH et R⁹ représente H ou -COOR⁸ 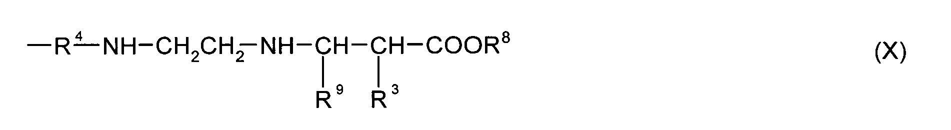 ou où R² représente un radical de l'une des formules (XI), (XIa) ou (XII) à (XX) ou de la formule (XVIIIa) ou de la formule (XXa) ou de la formule (XXb) ou de la formule (XXc) : 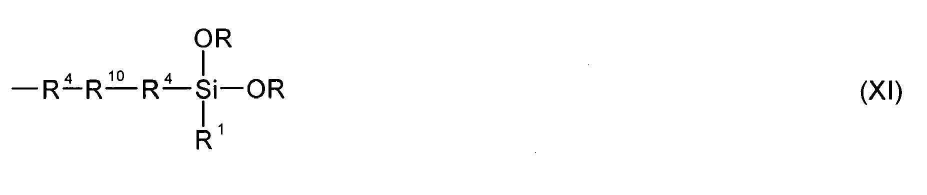 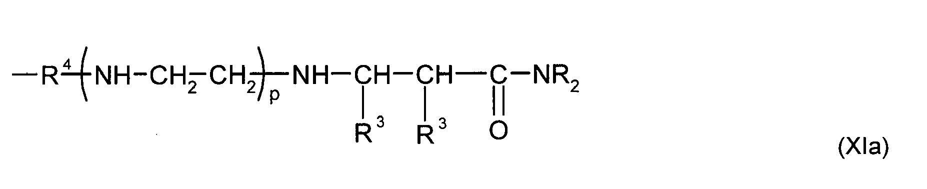 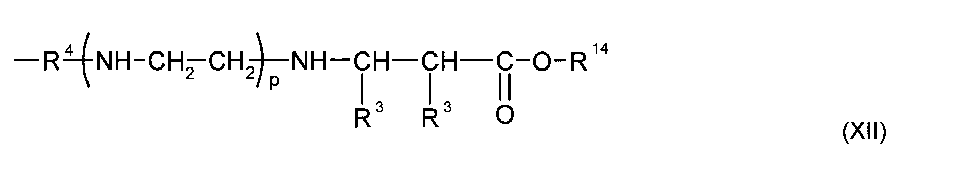 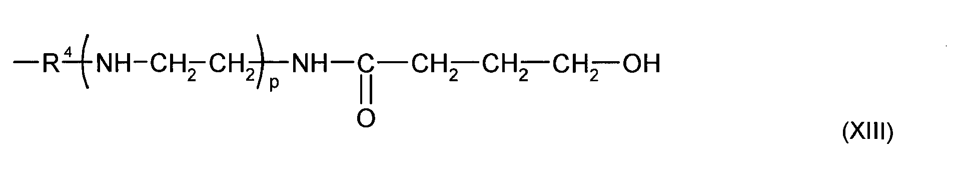 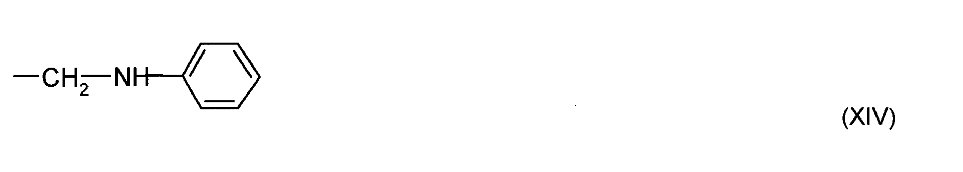 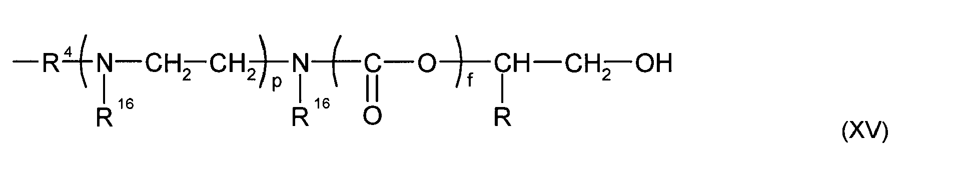 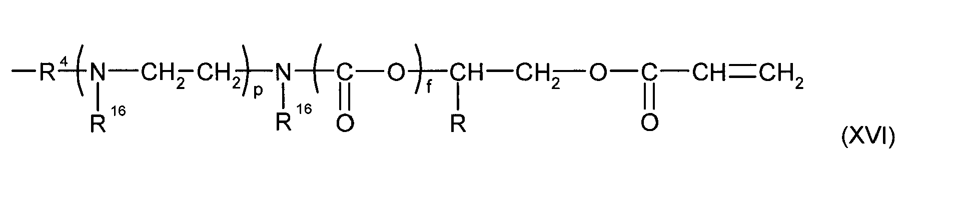 où p représente 0, 1 ou 2,
dans toutes les formules, R⁴ représente un radical hydrocarbyle, linéaire ou ramifié, divalent, de 1 à 4 atomes de carbone,
R³ à chaque occurrence représente H ou CH₃,
R¹⁴ représente H ou un radical alkyle linéaire ou ramifié de 1 à 18 atomes de carbone ou représente un radical de la formule (XIX),
où les unités individuelles - (CH₂-CH₂-O)- et -(CHR³-CHR³-O)-peuvent être distribuées à travers la chaîne de n'importe quelle manière désirée, où k et l sont chacun de 1 à 31, de préférence de 1 à 22, et la somme totale de k + l est de 3 à 45, de préférence de 3 à 25,
où f représente 0 ou 1,
tous les radicaux R¹⁶ représentent indépendamment H ou 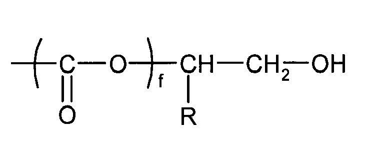 ou 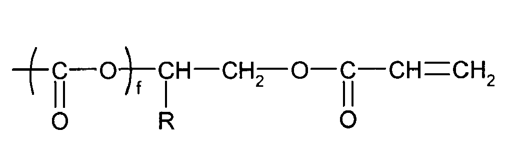 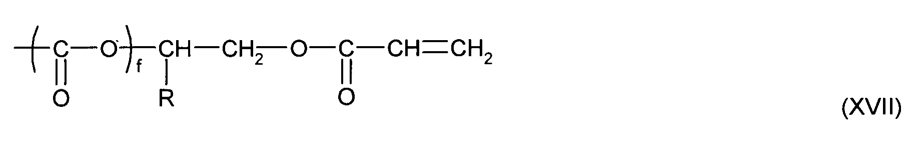 où A représente une liaison directe ou un radical divalent de la formule : 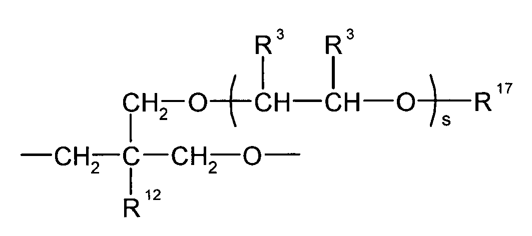 où, dans le cas de la formule (XVII), les valeurs de u, v et s sont choisies de telle sorte que le poids équivalent de ce radical R² se situe dans la plage de 100 à 5000, où un ou deux parmi u, v et s peuvent également représenter la valeur de 0 et où les unités individuelles :
-CH₂-CH₂-O-
et 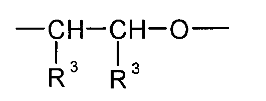 peuvent être distribuées à travers la chaîne de n'importe quelle manière souhaitée,
où R¹² représente H ou C₂H₅ et
où R¹⁷ représente R ou -R⁴-NH₂ ou 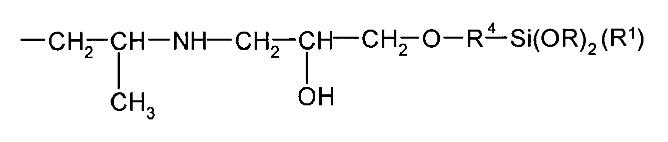 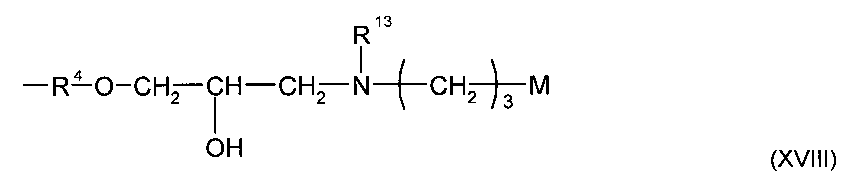 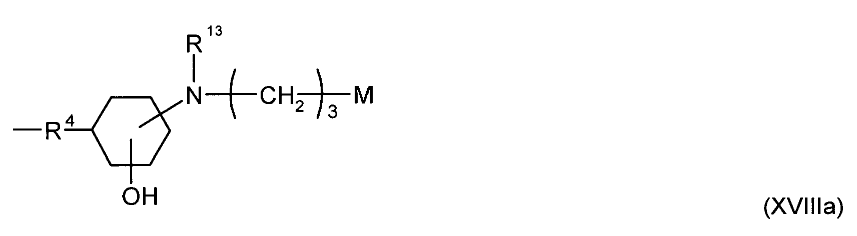 où M est choisi parmi : 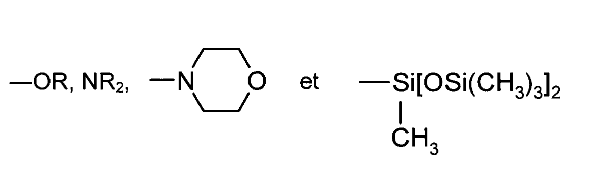 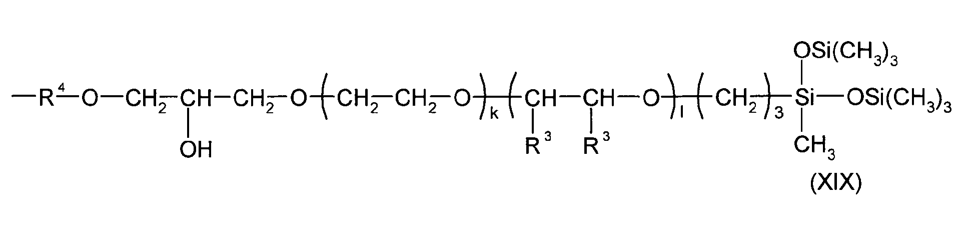 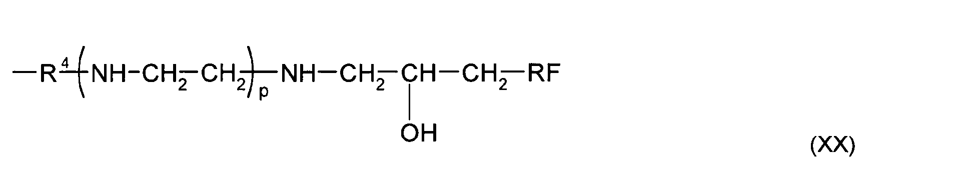 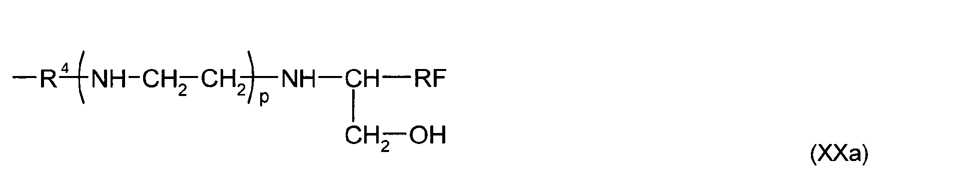 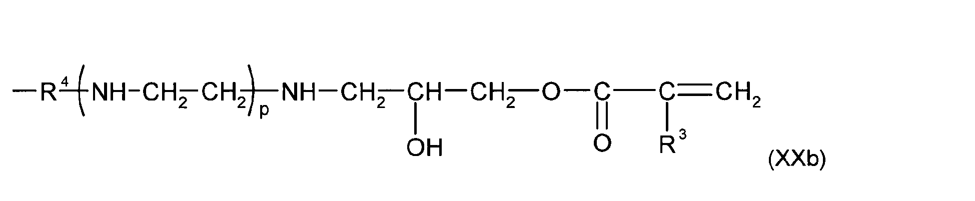 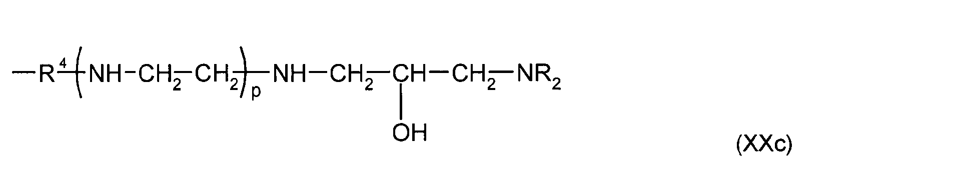 où RF représente un radical perfluoroalkyle de 5 à 23 atomes de carbone,
où R¹⁰ représente un radical divalent de l'une des formules (XXI) à (XXIVa) : 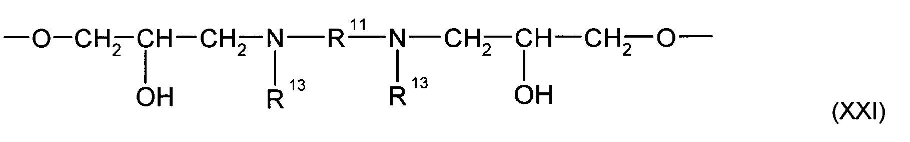 où R¹³ représente H ou -CH(CH₃)₂ ou -CH₂-CH(CH₃)₂, 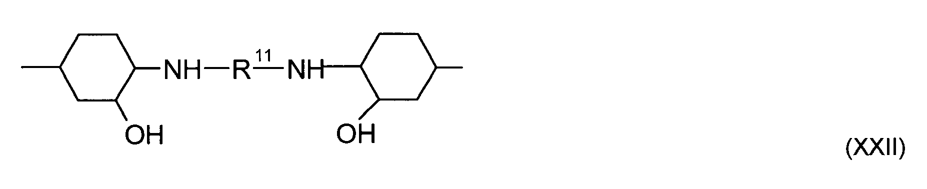 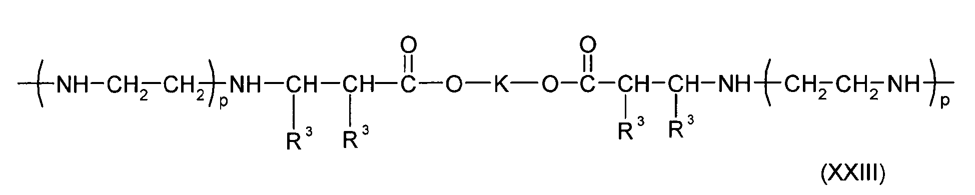 où K représente un radical alkylène linéaire ou ramifié de 2 à 18 atomes de carbone, 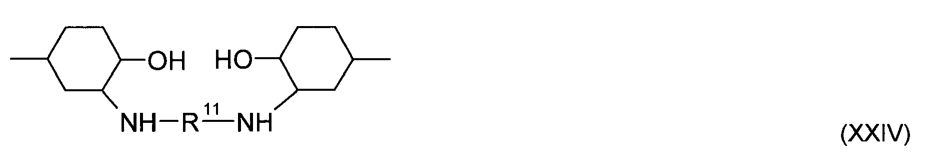 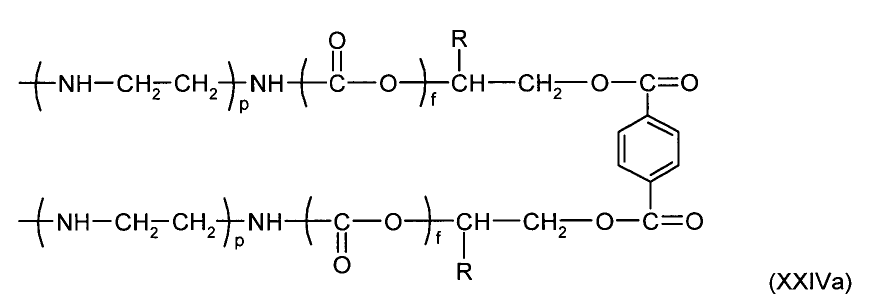 où f représente 0 ou 1,
où chacun des radicaux R¹¹ représente : 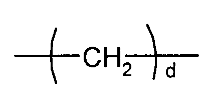 où d est de 1 à 6,
ou représente un radical de l'une des formules (XXV) à (XXXI) : 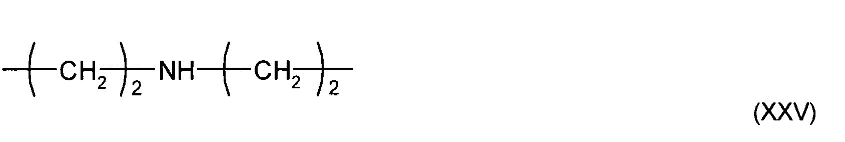 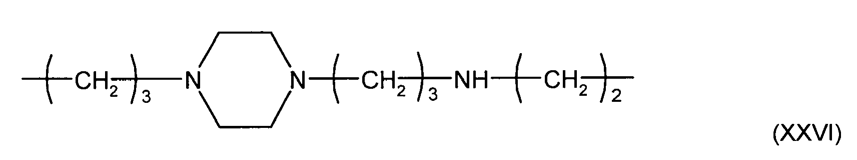 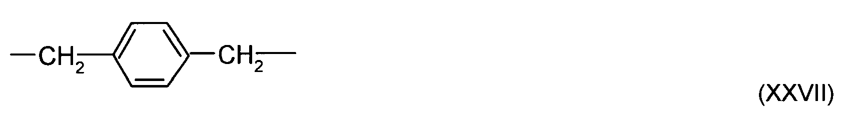 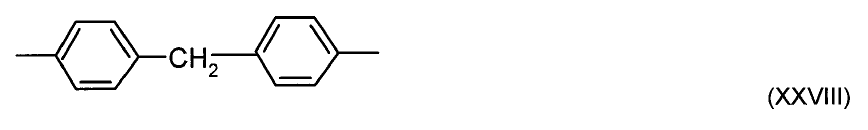 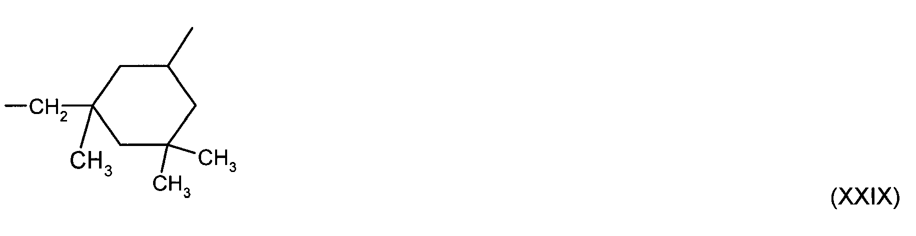 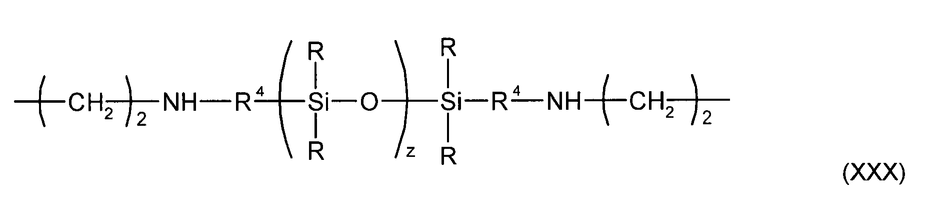 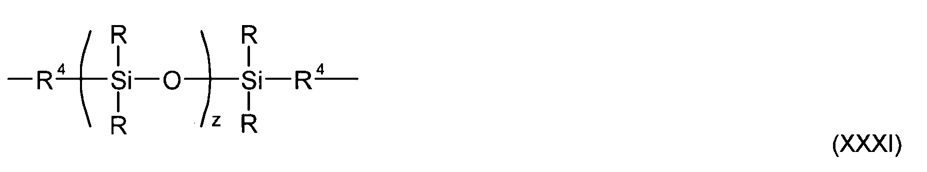 où z est de 8 à 500, de préférence de 8 à 20,
où la totalité ou une partie des atomes d'azote qui sont présents dans les formules mentionnées ci-dessus et qui ne font pas partie d'un groupe amide peut être présente sous forme quaternisée.

3. Polyorganosiloxane selon la revendication 2, **caractérisé en ce qu'**un polydiméthylsiloxane est utilisé comme polyorganosiloxane de la formule (VIII) pour la réaction avec le silane.

4. Polyorganosiloxane selon l'une des revendications 2 ou 3, **caractérisé en ce que** de 1 à 10 000 moles de polyorganosiloxane sont utilisées par mole de silane dans la réaction, de préférence de 5 à 1000 moles.

5. Utilisation du polyorganosiloxane selon l'une des revendications 2, 3 ou 4 dans le traitement de matières fibreuses, en particulier dans le traitement de tissus textiles.
